# EUROPÄISCHE PATENTSCHRIFT

(11) **EP 3 554 975 B1**
(45) Veröffentlichungstag und Bekanntmachung des Hinweises auf die Patenterteilung: **27.05.2020**
(21) Anmeldenummer: 17798183.4
(22) Anmeldetag: 10.11.2017
(51) Int. Cl.: B65G 47/64

(54) **SICHERES FÖRDERSYSTEM**
RELIABLE CONVEYOR SYSTEM
SYSTÈME DE TRANSPORT SÛR

(30) Priorität: 19.12.2016 DE 102016225485
(43) Veröffentlichungstag der Anmeldung: 23.10.2019
(73) Patentinhaber: Carl Zeiss Vision International GmbH, 73430 Aalen (DE)
(72) Erfinder: HOFER, Thomas, 73494 Rosenberg (DE); MESCHENMOSER, Ralf, 73457 Essingen (DE)
(74) Vertreter: Carl Zeiss AG - Patentabteilung
(86) Internationale Anmeldenummer: PCT/EP2017/078871
(87) Internationale Veröffentlichungsnummer: WO 2018/114135

(56) Entgegenhaltungen:
- EP-A1- 3 064 455
- DE-U- 7 219 720
- JP-A- S6 337 023
- JP-A- H01 156 225
- US-A- 5 062 174
- US-A1- 2013 166 062

## Beschreibung

Die Erfindung betrifft eine Fördervorrichtung für Transportbehälter für Brillenlinsen, mit einem Transporttisch, der eine runde Transportfläche und einen Transportantrieb zum Fördern der Transportbehälter in einer horizontalen Transportrichtung entlang der Transportfläche aufweist, und mit einem Drehantrieb zum Drehen des Transporttisches um eine vertikale Achse (A).

Von der Fa. Alztec ist eine entsprechende Fördervorrichtung erhältlich, die als Drehtisch ausgebildet ist, http://www.alztec.com/drehtische.php. Dieser Drehtisch ist begehbar und für die Förderung von Paletten ausgelegt und weist daher relativ große Abmessungen auf. Er wird in einer Kombination mit Rollenförderern eingesetzt und weist im Randbereich, also im Bereich des Anschlusses der Rollenförderer und im Bereich der Förderrollen, potentielle Gefahrenstellen auf, an denen Verletzungsgefahr durch Quetschung oder Scherung einer Hand oder eines Fingers möglich ist.

Auch von der Fa. kardexmlog sind Drehtische für Paletten erhältlich, http://www.kardexmlog.de/de/products-mlog/foerdertechnik/umsetzer.html. Diese Drehtische dienen zur Eckumsetzung von Paletten.

Die EP 1 947 035 A1 zeigt eine Sortiervorrichtung für Rollenfördervorrichtungen mit einem Sortiertisch, der eine quadratische Sortierfläche aufweist. Diese Sortierfläche besteht aus einer Vielzahl von kleinen Drehtellern, die zum Ändern der Förderrichtung gedreht werden können.

Gattungsgemäße oder gattungsähnliche Fördervorrichtungen sind auch aus den Dokumenten DE 295 06 230 U1, DE 43 35 195 A1, DE 72 19 720U, DE 41 19 790 C2, GB 1 389 820 A und DE 27 54 387 A1 bekannt. Eine Stapelvorrichtung ist der US 2013/0166062 A1 zu entnehmen. Insbesondere offenbart JP H01 156225 A eine Fördervorrichtung geeignet für einen Transportbehälter für Brillenlinsen, mit
- einer Linearfördereinheit zum Fördern des Transportbehälters in einer geradlinigen Richtung
- einer Dreheinheit zum Drehen der Linearfördereinheit
- einem eine Ebene aufweisenden und sich beim Drehen der Linearfordereinheit mit drehenden ersten Gehäuseelement für die Dreheinheit, wobei das sich beim Drehen der Linearfordereinheit mit drehende erste Gehäuseelement eine oder mehrere erste Öffnungen aufweist, durch die die Linearfordereinheit die Ebene durchsetzt,
wobei die Linearfördereinheit durch ein oder mehrere Spalte mit zugeordneten Spaltmaßen von der Ebene beabstandet ist.

Diese bekannten Lösungen weisen allesamt große Spalte oder mehrere offenliegende Teile auf, die sich relativ zueinander oder relativ zu feststehenden Teilen bewegen. Während des Betriebs besteht bei einer Berührung dieser Teile, beispielsweise mit der Hand, eine erhöhte Verletzungsgefahr. Bedienpersonal kann bei einer unachtsamen Bedienung mit den angetriebenen bewegten Teilen in Verbindung kommen und sich Verletzungen, beispielsweise Quetschungen oder Scherungen, zuziehen. Außerdem sind die bekannten Systeme für den Transport großer Stückgüter vorgesehen und weisen in der Regel relativ große Abmessungen auf, sodass ein entsprechendes Fördersystem insgesamt eine große Stellfläche benötigt.

Die DIN EN 349:1993+A1:2008 legt Mindestabstände zur Vermeidung des Quetschens von Körperteilen fest. Die DIN EN ISO 13857:2008 bestimmt Sicherheitsabstände gegen das Erreichen von Gefährdungsbereichen mit den oberen und unteren Gliedmaßen.

Es ist die Aufgabe der vorliegenden Erfindung, eine Vorrichtung zur Förderung von Transportbehältern für Brillenlinsen zu schaffen, die flexibel einsetzbar ist und dabei hohe Sicherheitsanforderungen erfüllt. Dabei soll vorzugsweise der benötigte Bauraum bzw. die benötigte Stellfläche möglichst klein ausfallen. Darüber hinaus soll ggf. ein Einsatz unter Rein- oder Grauraumbedingungen möglich sein.

Diese Aufgabe wird erfindungsgemäß durch eine NxM-Matrix aus Fördervorrichtungen mit den Merkmalen des Anspruchs 1 oder die Verwendung einer dieser Fördervorrichtungen in einer derartigen Matrix mit den Merkmalen des Anspruchs 2 oder eine Fördervorrichtung mit den Merkmalen des Anspruchs 3 gelöst.

Vorteilhafte Ausführungen und Weiterbildungen der Erfindung sind Gegenstand des Anspruchs 4.

Die erfindungsgemäße Fördervorrichtung für einen Transportbehälter für Brillenlinsen umfasst eine Linearfördereinheit zum Fördern des Transportbehälters in einer geradlinigen Richtung und eine Dreheinheit zum Drehen der Linearfördereinheit. Unter Drehen der Linearfördereinheit versteht man im Rahmen der vorliegenden Beschreibung die Neuausrichtung der Linearfördereinheit zum Fördern des Transportbehälters in einer anderen von der ursprünglichen geradlinigen Richtung abweichenden geradlinigen Richtung.

Zum Schutz vor Berühren der Dreheinheit ist die Dreheinheit in einem Gehäuse angeordnet. Dieses Gehäuse umfasst ein eine Ebene aufweisendes und sich beim Drehen der Linearfördereinheit ist durch ein oder mehrere Spalte mit zugeordneten Spaltmaßen von der Ebene beabstandet.

Erfindungsgemäß ist vorgesehen, dass die Spaltmaße sämtlicher Spalte kleiner oder gleich 5 mm sind. Weiterhin ist erfindungsgemäß vorgesehen dass das erste Gehäuseelement eine Mehrzahl an die Ebene durchdringende zweite Öffnungen mit zugeordneten Öffnungsbreiten aufweist, welche sämtlich kleiner oder gleich 5 mm sind.

Für einen Benutzer wird eine quasi durchgehend abgedeckte Ebene geschaffen, die einen wirksamen Berührschutz darstellt. Es wird zuverlässig verhindert, dass ein Benutzer unabsichtlich in einen Spalt oder in eine Öffnung greift und dadurch möglicherweise Quetschungen oder Scherungen erleidet.

Die Eignung der Fördervorrichtung für Transportbehälter für Brillenlinsen bedeutet, dass relativ kleine Transportbehälter mit einer Breite von unter 40 cm und einer Länge von unter 50 cm zuverlässig transportiert werden können.

Spaltmaß bedeutet in diesem Zusammenhang ein Abstand zwischen aneinander angrenzenden und zueinander benachbarten Bauteilen. Solche Bauteile können ein Bestandteil der Linearfördereinheit oder Bestandteile des Gehäuses sein. Es kann sich auch um den Abstand zwischen der Ebene und angrenzenden Bauteilen, wie beispielsweise einer feststehenden Gehäusewand der Fördereinrichtung handeln.

Öffnungen sind in diesem Zusammenhang z.B. runde oder eckige Ausnehmungen oder Aussparungen, die beispielsweise in der Ebene angeordnet sind und zur Gewichtsreduktion der zu bewegenden Masse dienen können.

Unter Ebene wird vorliegend eine ebene Fläche verstanden, entlang derer die Transportbehälter transportiert werden. Insbesondere kann die Ebene Bestandteil einer als Gehäuseelement dienenden Platte aus einem Metall oder Kunststoff oder eines Lochblechs ausgebildet sein. Vorzugsweise ist das Gehäuseelement an einem Transporttisch gehaltert, beispielsweise abnehmbar gehaltert. Die Ebene kann als Oberfläche des Transporttisches ausgebildet sein und dazu dienen, die zu transportierenden Transportbehälter von unten abzustützen oder ein Kippen der Transportbehälter zu verhindern. Beim Drehen des Transporttisches wird das von dem Transporttisch gehalterte Gehäuseelement ebenfalls bewegt.

Die Erfindung besteht darin, dass ein die Dreheinheit umschließendes feststehendes kreiszylinderförmiges zweites Gehäuseelement vorhanden ist, welches sich beim Drehen der Linearfördereinheit nicht mit dreht, und dass sich die Ebene des sich beim Drehen der Linearfördereinheit mit drehenden ersten Gehäuseelements innerhalb des feststehenden zweiten Gehäuseelements befindet und formkomplementär zum feststehenden zweiten Gehäuseelement ausgebildet ist.

Bei dieser Ausführungsvariante einer Fördervorrichtung ist die Ebene des sich beim Drehen der Linearfördereinheit mit drehenden ersten Gehäuseelements von dem feststehenden zweiten Gehäuseelement vorzugsweise durch einen Spalt mit einem Spaltmaß beabstandet, welches kleiner oder gleich 5 mm ist. Dadurch ist ein Berührungsschutz gewährleistet.

Die Ebene ist bei dieser Ausführungsvariante in oder unmittelbar auf einem feststehenden, insbesondere vertikal verlaufenden, Zylinder angeordnet. Der feststehende Zylinder bildet eine Gehäuseaußenseite oder Gehäuseaußenwand der Fördervorrichtung. Durch den feststehenden Zylinder weist die Fördereinrichtung an ihrer Gehäuseaußenwand keine beweglichen Teile auf, so dass an dieser Stelle für Bedienpersonal keine Gefahr für Quetschungen oder Scherungen besteht.

Das Spaltmaß zwischen der eine Transportfläche bildenden Ebene und dem Zylinder beträgt kleiner oder gleich 5 mm, um für eine Bedienperson einen Eingreifschutz zu bilden. Der Zylinder weist also einen Durchmesser auf, der im Wesentlichen dem Durchmesser der Transportfläche entspricht. Der Zylinder bildet zusammen mit der Transportfläche einen Berührschutz aus und verhindert eine unabsichtliche Berührung dieser Antriebskomponenten, und vermeidet gefährliche Quetsch- oder Scherstellen, um Bedienpersonal zu schützen. Der Zylinder bildet also zusammen mit der die Transportfläche bildenden Ebene ein Gehäuse aus.

Die die Transportfläche darstellende Ebene bildet durch die Öffnungen mit einem Durchmesser oder einer lichten Breite von kleiner gleich 5 mm für Bedienpersonal eine quasi geschlossene Fläche aus und schließt die Oberseite des Zylinders ab. Potentiell gefährliche Komponenten, wie beispielsweise rotierende Rollen oder umlaufende Antriebsriemen sind dadurch vor einer unabsichtlichen und gefahrbringenden Berührung durch Bedienpersonal gesichert. Die Außenabmessungen des Zylinders bilden die maximale Störkontur der Fördereinrichtung aus. D. h. ein möglicher Gefahrenbereich der Fördervorrichtung ist auf die Abmessungen des Zylinders begrenzt.

Zudem kann vorgesehen sein, dass die von der Dreheinheit und die Linearfördereinheit umfassten Komponenten innerhalb des Gehäuses angeordnet sind oder weniger als 5 mm über das Gehäuse hinausragen. Somit können die angetriebenen Komponenten der Fördervorrichtung innerhalb des durch Zylinder und Transportfläche gebildeten Gehäuses aufgenommen sein bzw. 5 mm oder weniger über das Gehäuse überstehen. Dadurch wird zum einen der notwendige Bauraum reduziert und zum anderen die Gefahr von Quetsch- oder Scherstellen reduziert.

Um einen störungsfreien Transport zu gewährleisten, ist für den Fall, dass die Transportfläche in dem Zylinder angeordnet ist vorgesehen, dass das obere Ende der Zylinderwand mit der Transportfläche fluchtet.

Insbesondere ist die Fördervorrichtung auf den Transport kleinerer Transportbehälter ausgelegt, deren Abmessungen in der Regel 50 cm in der Länge und 40 cm in der Breite nicht überschreiten. In den Transportbehältern können optische Bauteile, beispielsweise Linsen für Brillengläser, Brillenfassungen oder andere Kleinteile transportiert werden. Es kann vorgesehen sein, dass der Durchmesser des Zylinders bzw. der Durchmesser der Transportfläche kleiner als 60 cm beträgt, vorzugsweise 50 cm oder 40 cm oder auch 30 cm oder weniger beträgt um auch Transportbehälter mit kleinen Abmessungen effizient, das heißt auf einer kleinen Stellfläche zu transportieren. Die Linearfördereinheit dient insbesondere zum automatisch angetriebenen Transport eines Transportbehälters entlang eines vorgegebenen Förderstroms. Ein Förderstrom besteht aus mehreren mit Abstand aufeinanderfolgend angeordneten Transportbehältern.

Über die Dreheinheit wird die Transportrichtung in einer vorzugsweise horizontalen Ebene verändert indem die Dreheinheit den Transporttisch bzw. die Transportfläche um eine Achse, insbesondere im Falle einer horizontalen Anordnung der Ebene um eine vertikale Achse, dreht. Die Dreheinheit kann die Linearfördereinheit dabei um beliebig wählbare Winkel drehen. Beispielsweise weist die Dreheinheit einen Servomotor oder einen Schrittmotor auf, der von einer Steuerungsvorrichtung angesteuert wird, um einen gewünschten Winkel einzustellen. So ist es möglich, einzelne Transportbehälter aus einem kontinuierlichen Förderstrom auszuschleusen oder einem zweiten Förderstrom zuzuleiten. Da durch die Dreheinheit beliebige Winkel eingestellt werden können, ist dabei nicht nur ein Ausschleusen quer zu dem Förderstrom möglich, sondern es können verschiedene Richtungen gewählt werden. Daher ist auch ein Verzweigen des Förderstroms in mehrere Teilströme möglich.

Der Zylinder bildet einen Kreiszylinder. Die Transportfläche bildet die Oberseite des Zylinders und ist kreisrund ausgebildet. Die runde Transportfläche schließt den feststehenden Zylinder nach oben hin ab, so dass der Zylinder zusammen mit der Transportfläche ein zumindest nach oben hin abgeschlossenes Gehäuse ausbildet. Die Längsachse des Zylinders verläuft vorzugsweise in vertikaler Richtung. Der Zylinder ist innen hohl ausgebildet und bildet daher in seinem Inneren einen Bauraum zur Aufnahme von Komponenten der Fördervorrichtung aus. An der Unterseite kann der Zylinder einen Sockel aufweisen, der den Zylinder selbst bzw. die einzelnen Komponenten der Fördereinrichtung trägt. Zum Aufstellen der Fördervorrichtung kann ein Gestell mit höhenverstellbaren Füßen vorgesehen sein, welches als mechanisch stabile und in der Höhe justierbare Halterung dient, um die Fördervorrichtung bzw. den Sockel zu tragen. So kann die Fördervorrichtung unmittelbar an ein Ende oder an einen Anfang eines Förderbandes angrenzend angeordnet werden.

Es ist vorgesehen, dass die Dreheinheit vollständig innerhalb des abgeschlossenen Gehäuses angeordnet ist. Angetriebene bzw. bewegte Teile, bei denen eine Quetschgefahr besteht, sind somit vollständig innerhalb des Zylinders bzw. des abgeschlossenen Gehäuses angeordnet und damit für Bedienpersonal außerhalb des Gefahrenbereichs.

Um die Sicherheit der Fördervorrichtung weiter zu verbessern, kann vorgesehen sein, dass die Außenkante der die Transportfläche bildenden Ebene einen geschlossenen, kreisförmigen Verlauf aufweist und ein mittlerer Bereich der Transportfläche als Gitterfläche mit runden oder eckigen Öffnungen, insbesondere Ausnehmungen, ausgebildet ist. Vorzugsweise sind die Abmessungen der Öffnungen, insbesondere der Ausnehmungen, in ihrem Durchmesser oder in ihrer lichten Breite kleiner gleich 5 mm, vorzugsweise kleiner gleich 4 mm.

In einer Ausgestaltung kann vorgesehen sein, die Fördervorrichtung in einem Reinraum oder Grauraum zu verwenden. Ein Reinraum ist ein Raum bei dem in der Luft vorhandene störende Partikel durch spezielle Reinigungsmaßnahmen möglichst gering gehalten werden.

Zudem können Parameter wie beispielsweise Temperatur und/oder Luftfeuchtigkeit überwacht und konstant gehalten werden. Reinräume werden bei verschmutzungsanfälligen Herstellungsverfahren, beispielsweise bei der Fertigung von optischen Geräten oder optischen Bauteilen oder bei der Herstellung keimfreier Lebensmittel verwendet. Ein Grauraum unterscheidet sich von einem Reinraum durch reduzierte Anforderungen an die Luftreinheit.

Für eine solche Anwendung ist es von Vorteil, wenn die Fördervorrichtung mit gereinigter Luft gespült werden kann. Um dabei eine möglichst laminare Luftströmung zu erzielen ist es von Vorteil, wenn die Öffnungen in der Ebene derart bemessen sind und ihre Anzahl derart festgelegt ist, dass entweder die Ebene in senkrechter Projektion eine Flächenüberdeckung von weniger als 60 %, vorzugsweise weniger als 50 % aufweist. Durch diese relativ geringe Flächenüberdeckung kann der Zylinder bzw. die Fördervorrichtung mit einer Luftströmung insbesondere in einer vertikalen Richtung umspült oder durchspült werden, ohne dass dabei störende Turbulenzen entstehen. Dadurch ist es möglich, die Fördervorrichtung auch für verschmutzungsanfällige Aufgaben, wie beispielsweise bei der Herstellung von optischen Geräten, insbesondere Brillenlinsen, zu verwenden.

Die Öffnungen, insbesondere Ausnehmungen, in der Ebene verringern zudem deren Masse, so dass die zu bewegende Masse der Fördervorrichtung verkleinert wird. Von Vorteil ist, dass aufgrund der geringen Masse die Ebene bereitstellenden Gehäuseelements, z.B. des Transporttisches, die Dreheinheit nur relativ wenig Kraft benötigt, um die Linearfördereinheit zu drehen. Dies ermöglicht mit relativ kleinen Antriebskräften auszukommen und über eine Drehkraftbegrenzung auf kleine, d. h. ungefährliche Werte kann die Sicherheit der Fördervorrichtung weiter gesteigert werden.

Der Zylinder ist mit einer in sich geschlossenen Mantelfläche ausgebildet.

Dabei kann die in sich geschlossene Mantelfläche des Zylinders zur Materialreduktion oder Gewichtsreduktion runde oder eckige Öffnungen bzw. Ausnehmungen aufweisen, deren Durchmesser oder deren lichte Breite oder lichte Länge kleiner gleich 5 mm oder kleiner gleich 4 mm sind. Der Zylinder kann beispielsweise durch ein kreisrund geformtes Blech aus Aluminium oder Stahl, insbesondere durch ein Gitterblech gebildet sein.

In einer Ausgestaltung kann die Dreheinheit mit einer Steuerungsvorrichtung verbunden sein. Dabei kann die Steuerungseinrichtung die maximale Kraft und/oder die maximale Geschwindigkeit des Drehantriebs begrenzen. Außerdem kann die Steuerungseinrichtung beispielsweise über einen Sensor oder anhand einer Überwachung des Betriebsstroms des Drehantriebsmotors eine Verklemmung der Dreheinheit detektieren. Bei Auftreten einer Verklemmung kann die Steuerungseinrichtung den Drehantrieb abschalten oder retournieren, um die Verklemmung zu beseitigen.

Für das Fördern von Transportbehältern entlang der die Transportfläche bildenden Ebene kann vorgesehen sein, dass die Linearfördereinheit einen Transportantrieb aufweist, der als Förderbandantrieb ausgebildet ist. Der Transportantrieb kann dazu ein über zwei Umlenkrollen endlos umlaufendes Förderband aufweisen, dessen oberes Trum oberhalb der Ebene verläuft und dessen unteres Trum unterhalb der Ebene verläuft. Dabei kann das obere Trum zu der Ebene einen Abstand von kleiner gleich 5 mm aufweisen, um eine Verletzungsgefahr zu minimieren.

Um Fertigungstoleranzen oder alterungsbedingten Verschleiß des Förderbands auszugleichen, ist vorgesehen, dass die Spannung des Förderbands justiert werden kann. Es ist vorgesehen, dass der Abstand der beiden Umlenkrollen eines Förderbands einstellbar ist. Beispielsweise kann die Position einer Umlenkrolle über eine Stellschraube verändert werden. So ist es möglich, in der Praxis auftretende Längungen eines Förderbands oder Toleranzen eines Förderbands auszugleichen und die Spannung des Förderbands auf einem optimalen Wert zu halten.

Das Förderband kann zwei parallel und mit Abstand zueinander angeordnete Förderbänder aufweisen, die über eine gemeinsame Antriebswelle verbunden sind. Ein konstruktiv einfacher Aufbau ergibt sich, indem die Antriebswelle drehfest mit einer Umlenkrolle eines Förderbands verbunden ist.

Ein Antrieb des Förderbands kann erfolgen, indem der Transportantrieb einen Antriebsmotor zum Antreiben der Antriebswelle aufweist und entweder der Abtrieb des Antriebsmotors direkt oder über ein Getriebe, insbesondere ein Zahnradgetriebe oder ein Riemengetriebe mit der Antriebswelle verbunden ist. Alternativ kann eines der Förderbänder über eine dritte Umlenkrolle geführt sein, die unterhalb der Transportfläche angeordnet und von dem Antriebsmotor angetrieben wird.

Um einen problemlosen Transport der Transportbehälter zu ermöglichen, kann vorgesehen sein, dass der Transporttisch zwei parallel verlaufende Leitbleche aufweist. Die Enden der Leitbleche können derart aufgebogen sein, dass diese jeweils einen Einlasstrichter oder einen Auslasstrichter ausbilden. Der Abstand der beiden Leitbleche zueinander ist dabei an die maximale Breite des zu fördernden Transportbehälters angepasst.

In einem Anwendungsbeispiel kann die Fördervorrichtung direkt innerhalb einer Bearbeitungsstation einer Fertigungslinie eingesetzt werden. Aufgrund der geringen Abmessungen der Fördervorrichtung kann diese beispielsweise innerhalb einer CNC-Maschine oder innerhalb einer Schleifmaschine angeordnet werden. Dabei kann die Fördervorrichtung zu bearbeitende Brillenlinsen in Transportbehältern transportieren und der CNC-Maschine oder der Schleifmaschine zustellen oder von dieser abtransportieren. Für eine Bearbeitung kann eine Brillenlinse beispielsweise mit einem Roboterarm aus dem Transportbehälter entnommen und zu einem Bearbeitungsplatz transportiert werden. Unter Brillenlinse wird in diesem Kontext eine optische Linse für eine Brille verstanden. Das bearbeitete Teil kann anschließend in den Transportbehälter zurückgelegt und weitertransportiert werden.

Um den Durchsatz zu steigern kann auch eine zweite Fördervorrichtung vorgesehen sein, um die von der CNC-Maschine oder Schleifmaschine bearbeiteten Teile aufzunehmen und abzutransportieren. Auf diese Art und Weise ist es möglich optische Linsen auf einer relativ kleinen Stellfläche herzustellen.

In einem anderen Anwendungsbeispiel kann vorgesehen sein, dass die Fördervorrichtung als Linienvereiniger ausgebildet ist. Dabei vereint die Fördervorrichtung einzelne Teilströme, die aus unterschiedlichen Transportrichtungen angeliefert werden, zu einem einzigen Förderstrom und fördert diesen in einer Transportrichtung weiter. In einem anderen Anwendungsfall ist denkbar, dass die Fördervorrichtung als Linienweiche ausgebildet ist. D.h. die Fördervorrichtung verteilt einen in einer Transportrichtung geförderten Förderstrom auf mehrere Teilströme und fördert diese jeweils in unterschiedliche Transportrichtungen weiter.

Ferner ist denkbar, dass die erfindungsgemäße Fördervorrichtung in der Praxis mit mehreren Einheiten zu einer größeren Sortiervorrichtung zusammengeschaltet wird. Eine solche Sortiervorrichtung kann beispielsweise mehrere der erfindungsgemäßen Fördervorrichtungen umfassen, die entweder unmittelbar aneinander anschließend oder mittels zwischengeschalteter Förderbänder zusammengeschaltet sind. Insbesondere können mehrere der Sortiervorrichtungen unmittelbar aneinander anschließend zu einem N x M - Matrix arrangiert werden. Mit einer solchen Sortiervorrichtung können auch komplexe Verteil- und Förderaufgaben auf einer relativ kleinen Stellfläche gelöst werden. Von Vorteil ist, dass die einzelnen erfindungsgemäßen Fördereinrichtungen direkt nebeneinander angeordnet werden können, da aufgrund der runden und feststehenden Außenkontur des Zylinders keine Quetschgefahr für Bedienpersonal in den zwischen den benachbarten Fördereinrichtungen vorhandenen Zwischenräumen besteht.

Insbesondere bildet der feststehende Zylinder die Außenkontur der Fördervorrichtung. Bei einer Kombination der Fördervorrichtung mit weiteren Fördervorrichtungen und/oder Förderbändern, die unmittelbar an benachbarte Fördervorrichtungen oder an Zuführbänder oder Abführbänder anschließen, ergeben sich durch den feststehenden Zylinder in dem Bereich zwischen den Fördervorrichtungen oder zwischen der Fördervorrichtung und den Zuführ- oder Abführbändern keine relativ zueinander beweglichen Teile, und damit keine gefährlichen Quetsch oder Scherstellen für Bedienpersonal.

Es ist ist vorgesehen, die Fördervorrichtung modular aufzurüsten um eine Lagervorrichtung für Transportbehälter auszubilden. Eine derartige Lagervorrichtung kann z.B. eine Haltevorrichtung aufweisen, um den Transportbehälter in einem Abstand oberhalb der Ebene zu haltern.

In einer konkreten Ausführungsvariante umfasst die Lagervorrichtung z.B. einen Rahmen mit zwei vertikal verlaufenden Schienen, wobei die Haltevorrichtung an den Schienen befestigt ist, um Transportbehälter an den wenigstens zwei Schienen zu haltern oder zu fixieren.

Insbesondere kann der Rahmen an seinem unteren Ende mit dem Transporttisch oder dem die Ebene bereitstellenden Gehäuseelementverbunden sein und die Haltevorrichtung haltert oder fixiert einen Transportbehälter an den Schienen in einem solchen vertikalen Abstand oberhalb des Transporttisches, der größer ist als die maximale Höhe eines zu fördernden Transportbehälters.

Eine besonders vorteilhafte Ausführungsform dieser Variante besteht darin, dass ein kreiszylinderförmiges drittes Gehäuseelement für die Haltevorrichtung vorhanden ist, welches verhindert, dass Personen in die Haltevorrichtung greifen können.

Eine weitere Ausgestaltung dieser Ausführungsform besteht darin, dass ein viertes Gehäuseelement vorhanden ist, welches das dritte Gehäuseelement oberendseitig abschließt. Das vierte Gehäuseelement weist analog zum ersten Gehäuseelement eine Mehrzahl an dritten Öffnungen mit zugeordneten Öffnungsbreiten auf, wobei die Öffnungsbreiten sämtlicher dritter Öffnungen kleiner oder gleich 5 mm sind und/oder die Anzahl der dritten Öffnungen derart bemessen ist, dass die Ebene in senkrechter Projektion eine Flächenüberdeckung von weniger als 60 % oder von weniger als 50 % aufweist.

Weiter kann eine Hubeinrichtung vorgesehen sein, die einen Transportbehälter von der die Transportfläche bildenden Ebene um eine etwas größere Strecke anhebt als die maximale Höhe eines zu fördernden Transportbehälters beträgt. Der angehobene Transportbehälter wird dann über die Haltevorrichtung, z.B. an den Schienen, fixiert. Die Lagervorrichtung haltert somit Transportbehälter mit einem solchen Abstand oberhalb der Ebene, dass der Transport von nachrückenden Transportbehältern nicht beeinträchtigt wird.

Die Haltevorrichtung haltert oder fixiert Transportbehälter an den Schienen in einem vertikalen Abstand oberhalb der Ebene, der größer ist als die maximale Höhe eines zu fördernden Transportbehälters. So kann die Lagervorrichtung, z.B. an den Schienen, einen oder mehrere Transportbehälter haltern und dient sozusagen als Lager oder als Puffer für Transportbehälter.

Um hohe Sicherheitsstandards zu erfüllen kann vorgesehen sein, dass das dritte Gehäuseelement als Berührschutz in Form eines zweiten, insbesondere vertikal verlaufenden, Zylinders ausgebildet ist, der auf den das dritte Gehäuseelement bildenden Zylinder der Fördervorrichtung aufsetzbar ist, wobei der Durchmesser des zweiten Zylinders dem Durchmesser des Zylinders der Fördervorrichtung entspricht. Die Länge des zweiten Zylinders entspricht bevorzugt wenigstens der Länge der Lagervorrichtung, insbesondere z.B. des oben beschriebenen Rahmens, um einen vollflächigen Berührschutz zu bilden. Der zweite Zylinder kann z.B. an dem Rahmen gehaltert sein. Zum Zuführen oder Abführen von Transportbehältern kann der zweite Zylinder Öffnungen aufweisen, die an seinem unteren Ende angebracht und an die Abmessungen eines Transportbehälters, insbesondere an dessen Querschnitt, angepasst sind.

Um eine mechanisch stabile Lagerung der Transportbehälter zu ermöglichen, kann vorgesehen sein, dass die Schienen die Transportbehälter seitlich führen bzw. abstützen. Vorzugsweise weist ein Transportbehälter jeweils eine seitliche Nut auf, in die eine Führungsschiene der Haltevorrichtung oder der Hubeinrichtung eingreift.

Um einen Transportbehälter zu lagern, muss dieser vertikal angehoben werden. Dazu kann vorgesehen sein, dass die Schienen einen Hubantrieb aufweisen, um Transportbehälter in vertikaler Richtung von dem Transporttisch anzuheben und/oder auf den Transporttisch abzusenken. Der Hubantrieb kann dabei an dem Transporttisch oder an einer oder an beiden Schienen angeordnet sein, um Transportbehälter in vertikaler Richtung anzuheben oder abzusenken.

An den Schienen können mehrere Transportbehälter übereinander angeordnet sein. So ist es möglich, dass aus mehreren übereinander angeordneten Transportbehältern ein an den Schienen gehalterter Stapel entsteht. Der Rahmen kann demzufolge einen Stapel umfassend mehrere in vertikaler Richtung übereinander angeordnete Transportbehälter haltern. Die Halterung erfolgt vorzugsweise indem die Haltevorrichtung zumindest den untersten Transportbehälter an den vertikal verlaufenden Schienen haltert oder fixiert. Ein solcher Stapel kann aus einer Mehrzahl, vorzugsweise mehr als fünf, übereinander angeordneten Transportbehältern bestehen. Zum Aufbau des Stapels werden einzelne Transportbehälter nacheinander angehoben. Dabei schieben sich diese die bereits im Stapel vorhandenen Transportbehälter um einen Platz nach oben. Der an den Schienen aufgebaute Stapel kann zum kurzfristigen Zwischenlagern einzelner Transportbehälter oder zum langfristigen Lagern, d.h. für eine Vorratslagerung einzelner Transportbehälter dienen. Es kann beispielsweise vorgesehen sein, dass die Lagervorrichtung in einer Produktionslinie eingesetzt wird, um als Zwischenlager oder als Puffer für Bauteile oder für Rohmaterial zu dienen.

Für ein einfaches Aufrüsten der erfindungsgemäßen Fördervorrichtung kann vorgesehen sein, dass der oben beschriebene Transporttisch zwei quer zu der Transportrichtung beabstandete Aufnahmen zum Anschluss der beiden vertikalen Schienen des Rahmens aufweist, wobei je eine dieser Aufnahmen in einem Bereich zwischen einem Förderband und der Außenkante des Transporttisches angeordnet ist und eine vertikal verlaufende Schiene mit dem Transporttisch vorzugsweise lösbar verbindet. Beispielsweise können die Schienen mit den Aufnahmen des Transporttisches verschraubt werden.

Um eine mechanisch stabile Bauweise zu erzielen, kann vorgesehen sein, dass der Rahmen an seiner Oberseite ein die beiden Schienen verbindendes Joch oder Gehäuse aufweist. Dabei ist zur Erhöhung der Sicherheit vorgesehen, dass die Länge der Schienen um mindestens 10 cm länger ist als die maximale Stapelhöhe der Stückgüter, sodass der Abstand zwischen dem Joch oder der Oberseite des Gehäuses und der Oberkante des Stapels wenigstens 10 cm beträgt. Dadurch wird verhindert, dass am oberen Ende des Stapels eine für das Bedienpersonal gefährliche Klemmstelle entsteht.

Für einen reibungslosen Transport ist insbesondere vorgesehen, dass der Abstand der vertikal verlaufenden Schienen zueinander wenigstens der Breite des zu transportierenden Transportbehälters entspricht. Demzufolge entspricht die Länge des die beiden Schienen verbindenden Jochs ebenfalls wenigstens der Breite des transportierenden Transportbehälters oder der Breite des zu transportierenden Transportbehälters und zusätzlich der Breite der Schienen.

In einer Ausgestaltung kann vorgesehen sein, dass die Hubeinrichtung einen ersten feststehenden Teil und einen zweiten in vertikaler Richtung angetrieben verfahrbaren Teil aufweist, wobei sowohl an dem ersten feststehenden Teil als auch an dem zweiten verfahrbaren Teil schwenkbare Schienen vorgesehen sind, die mit einer an einem Paket oder einem Transportbehälter angeordneten Nut zusammenwirken um diese zu halten. Zum Anheben oder Absenken von Transportbehältern werden die Schienen des feststehenden Teils ausgeschwenkt. Die Schienen des verfahrbaren Teils verbleiben in der Nut des Transportbehälters und haltern diesen. Anschließend wird der verfahrbare Teil des Hubantriebs zusammen mit den Transportbehältern vertikal zu einer unterhalb oder oberhalb liegenden Position verfahren. Abschließend werden an der neuen Position die Schienen des feststehenden Teils des Hubantriebs wieder eingeschwenkt um den Transportbehälter an der neuen Position zu fixieren. Zum Aufsetzen eines Transportbehälters auf den Transporttisch werden sowohl die Schienen des feststehenden Teils als auch die Schienen des beweglichen Teils gelöst, so dass der Transportbehälter auf den Transporttisch abgesenkt wird.

Alternativ oder ergänzend kann auch vorgesehen sein, dass der Transporttisch eine Hubeinrichtung mit einem Hubzylinder oder mehreren Hubzylindern aufweist, um Transportbehälter in vertikaler Richtung anzuheben oder abzusenken. Ein Hubzylinder weist an seiner Oberseite einen Hubstempel auf, der durch eine Öffnung des Transporttisches hindurchgreift. Die Öffnung ist vorzugsweise so bemessen, dass ein Spalt zwischen Stempel und Transporttisch kleiner oder gleich 5 mm oder kleiner gleich 4 mm beträgt um eine Quetschgefahr an diesem Spalt zu verringern.

Um zudem die Quetschgefahr für einen Benutzer im Bereich der vertikalen Schienen zu verringern, ist vorzugsweise auch vorgesehen, dass der Spalt zwischen den Schienen und dem von den Schienen gehalterten Transportbehälter kleiner gleich 5 mm ist.

Insbesondere ist in einer Ausgestaltung vorgesehen, dass in Ruheposition der Hubeinrichtung die Oberseite des Hubstempels fluchtend mit dem Transporttisch angeordnet ist. Dadurch wird in der Ruheposition die Öffnung des Transporttisches durch die Oberseite des Hubstempels verschlossen und für einen Benutzer ein Eingriff in unterhalb des Transporttisches liegende Komponenten verhindert.

Um die Sicherheit weiter zu erhöhen, kann vorgesehen sein, dass eine mit der Hubeinrichtung verbundene Steuerungsvorrichtung die Geschwindigkeit und/oder die Antriebskraft der Hubeinrichtung begrenzt. Ergänzend kann die Steuerungsvorrichtung die Hubeinrichtung bei einem Verklemmen entweder ausschalten oder ein Stück retournieren, um eine Verklemmung zu verhindern bzw. aufzulösen.

Ein mechanisch einfacher Aufbau ergibt sich, in dem vorgesehen ist, dass die Hubeinrichtung, insbesondere der Hubzylinder einen einzelnen Transportbehälter oder einen Stapel aus mehreren Transportbehältern bewegt. Wesentlich ist, dass der vertikale Hub der Hubeinrichtung etwas größer ist als die maximale Höhe eines zu fördernden Transportbehälters. D.h. ein einzelner Transportbehälter wird von der Oberfläche des Transporttisches angehoben und in eine solche Höhe transportiert, die oberhalb einer Oberkante des nächsten zu fördernden Transportbehälters liegt. Im Laufe dieser Bewegung stößt die Oberkante des anzuhebenden Transportbehälters an die Unterseite eines bereits an den Schienen vorhandenen Transportbehälters. Dabei nimmt die Hubeinrichtung bei ihrer Bewegung diesen automatisch mit und hebt diesen weiter an. Durch diese Bewegung ist es möglich, ohne einen zusätzlichen Hubantrieb alleine mit dem Hubstempel einen vertikalen Stapel bestehend aus mehreren einzelnen Transportbehältern zu bilden.

Das Entnehmen eines Transportbehälters aus dem Stapel läuft dabei in einer möglichen Ausgestaltung durch den Hubstempel wie folgt ab:
Bei leerem Transporttisch fährt der Hubstempel aus, bis seine Oberseite an der Unterseite des Stapels aus Transportbehältern anliegt. Anschließend wird die Haltevorrichtung gelöst, sodass der Stapel auf dem Hubstempel aufliegt und von diesem gehalten ist. Anschließend wird der Hubstempel zusammen mit dem Stapel so weit abgesenkt, bis der von unten gesehen zweite Transportbehälter des Stapels bis auf die entsprechende Höhe abgesenkt ist, die oberhalb einer Oberkante des nächsten zu fördernden Transportbehälters liegt. Durch Einschalten der Haltevorrichtung wird dieser Transportbehälter, welcher nun das unterste Teil des Stapels bildet, an den Schienen fixiert. Dadurch wird auch der gesamte restliche Stapel, der sich auf den untersten Transportbehälter stützt, über die Haltevorrichtung an den Schienen gehaltert und fixiert. Anschließend senkt der Hubstempel den untersten Transportbehälter weiter ab, bis dieser auf dem Transporttisch aufliegt. Daraufhin kann der Transporttisch diesen Transportbehälter in einer gewünschten Transportrichtung abtransportieren. Um die Transportrichtung zu ändern, dreht der Drehantrieb den Transporttisch zusammen mit der Lagervorrichtung in die gewünschte Lage.

Um eine möglichst kompakte Bauform zu erzielen, kann in einer Ausgestaltung vorgesehen sein, dass die horizontale Erstreckung des Rahmens in Transportrichtung und quer zu der Transportrichtung kleiner oder gleich des Durchmessers der Transporttisches ist, vorzugsweise dass der Durchmesser des Transporttisches größer ist als eine Längserstreckung und/oder Quererstreckung der zu fördernden Transportbehälter.

Eine Anwendung der erfindungsgemäßen Fördervorrichtung oder Lagervorrichtung kann in der Industrie im Rahmen einer Verteilung von Einzelteilen oder im Rahmen einer Lagerhaltung erfolgen. Auch bei dem Transport von Ersatzteilen kann die erfindungsgemäße Vorrichtung verwendet werden. Zudem kann die erfindungsgemäße Vorrichtung bei Fertigungslinien eingesetzt werden, um den kontinuierlichen Materialfluss von einzelnen Teilen zu sichern. Vor allem relativ kleine Teile wir beispielsweise optische Linsen können mit der Fördervorrichtung und/oder Lagervorrichtung auf relativ kleiner Stellfläche transportiert werden.

Es ist vorzugsweise vorgesehen, dass die Fördervorrichtung und/oder die Lagervorrichtung hauptsächlich für solche Transportbehälter eingesetzt wird, deren Außenabmessungen 50 cm in der Länge, 40 cm in der Breite und 35 cm in der Höhe nicht überschreiten. Insbesondere können mit der Fördervorrichtung und/oder mit der Lagervorrichtung kleine Transportbehälter gefördert werden, deren Abmessungen 20 cm x 10 cm x 10 cm oder noch weniger betragen.

In einer vorteilhaften Ausgestaltung weist der zweite Zylinder der Lagervorrichtung einen Durchmesser von 30 cm oder weniger auf. Somit wird aufgrund der kompakten Ausgestaltung der Fördervorrichtung und/oder der Lagervorrichtung, deren Abmessungen an die zu transportierenden Transportbehälter anpassbar ist, nur eine geringe Stellfläche für eine entsprechende Anlage benötigt. Der Durchmesser des ersten Zylinders und/oder des zweiten Zylinders definiert dabei die maximale Störkontur der Lagervorrichtung.

Von Vorteil ist, dass Transportbehälter in der Lagervorrichtung aufbewahrt oder zwischengespeichert werden können. Dadurch wird ermöglicht, dass ein unregelmäßig geförderter Produktstrom, d.h. ein Produktstrom, in dem mehrere Transportbehälter in unregelmäßigen Abständen und/oder stoßweise, also zu unregelmäßigen Zeiten gefördert werden, durch die Lagervorrichtung standardisiert wird. D.h. die einzelnen unregelmäßig angelieferten Transportbehälter werden in einem gewissen regelmäßigen Takt weitergefördert. Dabei ist vorgesehen, dass Transportbehälter, die mit einem zu kurzen Takt angeliefert werden, von der Lagervorrichtung zwischengelagert werden. Längere Pausen im Produktstrom können überbrückt werden, indem von der Lagervorrichtung zwischengelagerten Transportbehälter von der Fördereinrichtung in regelmäßigem Takt weiter transportiert werden.

Die Lagervorrichtung ist mit dem Stapel als Speicher nach dem FILO (First In Last Out) Prinzip aufgebaut. Das bedeutet, dass der zuerst eingelagerte Transportbehälter als letztes ausgegeben wird. Um einen Speicher zu erhalten, der nach dem FIFO (First In First Out) Prinzip arbeitet, können zwei oder mehr Lagervorrichtungen miteinander kombiniert werden. Dabei kann die Lagervorrichtung eine Horizontaltransportvorrichtung aufweisen, die z.B. im oberen Bereich des Rahmens oder des Zylinders angeordnet ist und ein Transportbehälter, vorzugsweise der im Stapel oberste Transportbehälter horizontal transportiert und an eine benachbarte Lagervorrichtung übergibt. In dem Stapel der benachbarten Lagervorrichtung wird dieser Transportbehälter dann nach unten transportiert und verlässt dann als erstes die Lagervorrichtung zum Weitertransport. Eine solche Lagervorrichtung kann beispielsweise als Zwischenspeicher zur Abkühlung von Bauteilen wie optische Linsen verwendet werden.

In einer Ausgestaltung kann vorgesehen sein, die Lagervorrichtung in einem Reinraum oder Grauraum zu verwenden. Dabei ist es von Vorteil, wenn die Lagervorrichtung mit gereinigter Luft gespült wird. Um dabei eine möglichst laminare Luftströmung zu erzielen, ist insbesondere vorgesehen, dass der Zylinder an seiner Oberseite durch ein Gitter abgedeckt ist, dessen Öffnungen derart bemessen sind, dass diese zumindest in einer Richtung kleiner oder gleich 5 mm sind und das Gitter eine solche Fläche abdeckt, dass in senkrechter Projektion die Lagervorrichtung eine Flächenüberdeckung von weniger als 60 %, vorzugsweise weniger als 50 % aufweist. Durch diese relativ geringe Flächenüberdeckung kann der Zylinder mit einer Luftströmung, insbesondere in einer vertikalen Richtung umspült oder durchspült werden, ohne dass dabei störende Turbulenzen entstehen.

Weiter kann vorgesehen sein, dass die Horizontaltransportvorrichtung ein Transportgehäuse aufweist, welches an der Oberseite des zweiten Zylinders angeordnet und an seiner Oberseite durch ein Abdeckgitter abgedeckt ist, dessen Öffnungen derart bemessen sind, dass diese kleiner oder gleich 5 mm sind und das Abdeckgitter eine solche Fläche abdeckt, dass in senkrechter Projektion die Lagervorrichtung eine Flächenüberdeckung von weniger als 60 %, vorzugsweise weniger als 50 % aufweist. Dabei kann das Abdeckgitter so bemessen sein, dass es zwischen Zylinder und Horizontalvorrichtung austauschbar ist, um die Anzahl der benötigten Teile zu reduzieren.

Die erfindungsgemäße Fördervorrichtung kann auch einen oder mehrere RFID-Transponder aufweisen, welcher dazu vorgesehen ist, ein mit einem Transportbehälter mitgeführtes RFID-Tag auszulesen. Das sich beim Drehen der Linearfördereinheit mit drehende erste Gehäuseelement weist in einer Ausführungsvariante eine oder mehrere fünfte Öffnungen auf, durch die der eine oder die mehreren RFID-Transponder die Ebene durchsetzen. Der eine oder die mehreren RFID-Transponder sind nach der Erfindung durch einen oder mehrere Spalte mit zugeordneten Spaltmaßen von der Ebene beabstandet, welche sämtlich kleiner oder gleich 5 mm sind.

In den Figuren sind weitere Ausführungsbeispiele der Erfindung gezeigt und nachstehend beschrieben.

Dabei zeigen:
- Fig. 1a bis 1c:: eine schematische Darstellung einer erfindungsgemäßen Fördervorrichtung;
- Fig. 2:: einen Transportbehälter;
- Fig. 3a-3c:: eine schematische Darstellung einer erfindungsgemäßen Fördervorrichtung mit Lagervorrichtung;
- Fig. 4:: die Lagervorrichtung nach den Figuren 3a-3c mit einer Hubeinrichtung;
- Fig. 5a 5b:: die Hubeinrichtung nach der Figur 4 in freigestellter Darstellung;
- Fig. 5c:: eine vergrößerte Darstellung eines Teils der Haltevorrichtung der Hubeinrichtung nach der Figur 4;
- Fig. 6:: eine erfindungsgemäße Fördervorrichtung mit Hubzylinder;
- Fig. 7:: eine Speicheranordnung mit einer Matrix von Fördervorrichtungen.

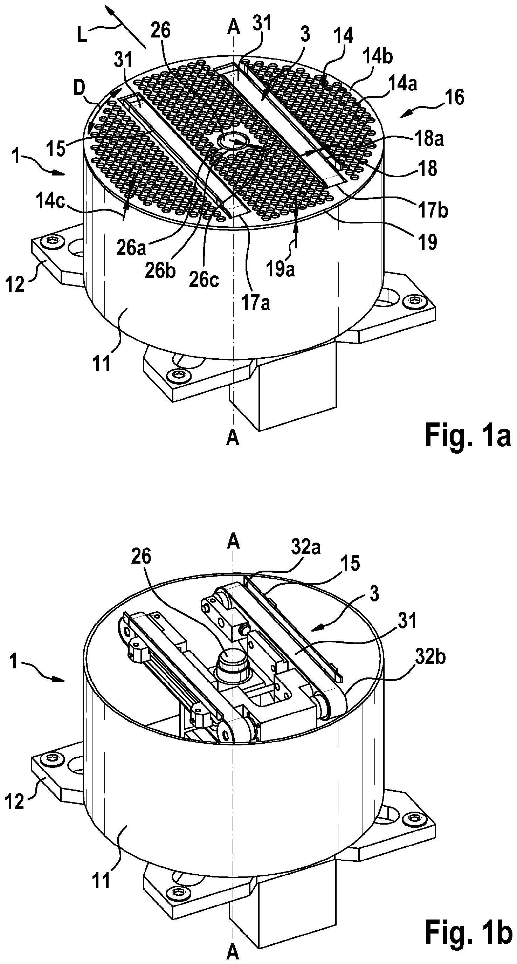

In den Figuren 1a bis 1c ist eine Fördervorrichtung 1 dargestellt. Die Fördervorrichtung 1 weist eine nachfolgend beschriebene Linearfördereinheit und eine nachfolgend vorgestellte Dreheinheit zum Drehen der Linearfördereinheit in den in der Figur 1a gezeigten Drehrichtungen D auf. Bestandteil der Fördereinheit ist ein auf einem Sockel 12 befestigter Zylinder 11 und ein Transporttisch 13. An seiner Oberseite ist der Zylinder 11 durch eine Transportfläche bildende horizontale Ebene 14a abgeschlossen, welche die Außenseite eines ersten Gehäuseelements 14 bildet. Der befestigte Zylinder 11 bildet ein zweites Gehäuseelement 11. Das erste Gehäuseelement 14 und das zweite Gehäuseelement 11 sind Komponenten eines Gehäuses 16, welches die Dreheinheit und zumindest teilweise die Linearfördereinheit umhaust.

An dem Transporttisch 13 ist ein Transportantrieb 3 der Linearfördereinheit angeordnet, um Transportbehälter entlang der Transportfläche 14a des Transporttisches 13 in einer Transportrichtung L zu transportieren.

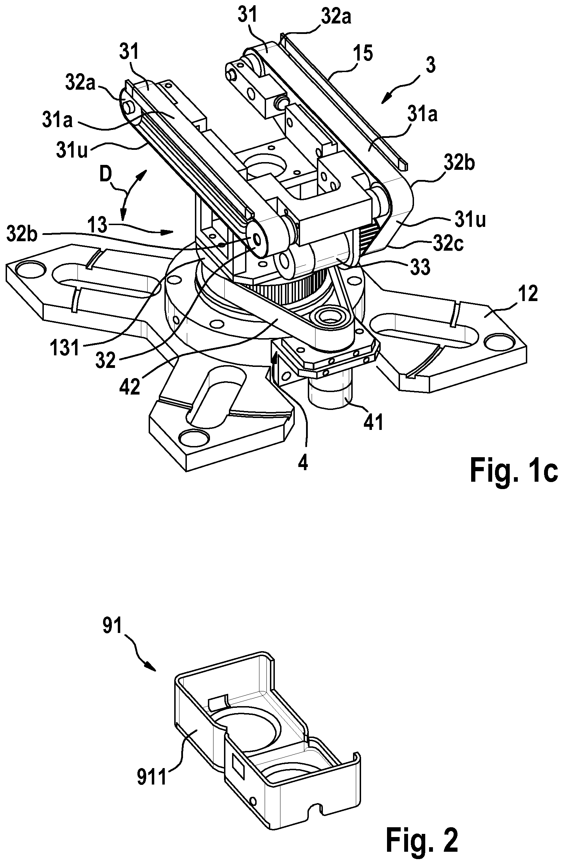

Die Figur 1b zeigt die Fördervorrichtung 1 mit abgenommenem ersten in Form einer Platte ausgebildetem Gehäuseelement 14 und in der Figur 1c ist die Fördervorrichtung 1 mit abgenommener Platte 14 und entferntem Zylinder 11 dargestellt um das Innere des Zylinders 11 zu skizzieren.

Der Transporttisch 13 weist eine auf dem Sockel 12 drehbar gelagerte Säule 131 auf. An der Säule 131 ist der Transportantrieb 3 gehaltert. An der Oberseite der Säule 131 trägt diese die Platte 14. Mit Hilfe eines Drehantriebs 4, der im Inneren des Zylinders 11 angeordnet ist, kann der Transporttisch 13 um die vertikal verlaufende Achse A gedreht werden, um die Transportrichtung L, nämlich die Richtung, in der ein Transportbehälter transportiert wird, zu ändern.

Der auf dem Sockel 12 befestigte Kreiszylinder 11 bildet zusammen mit der Platte 14 ein zumindest nach oben hin geschlossenes Gehäuse 16 aus. Innerhalb dieses geschlossenen Gehäuses 16 sind der Drehantrieb 4 der Dreheinheit und der Transportantrieb 3 der Linearfördereinheit angeordnet. D.h. alle beweglich angetriebenen Komponenten des Drehantriebs 4 oder Transportantriebs 3 befinden sich innerhalb des geschlossenen Gehäuses 16 oder weisen einen Abstand von weniger als 5 mm zu diesem Gehäuse 16 auf und sind somit gegen eine unbeabsichtigte Berührung geschützt. Der Drehantrieb 4 umfasst einen Drehmotor 41, der über ein Riemengetriebe mit einem Zahnriemen 42 eine Zahnscheibe antreibt, die mit dem Transporttisch 13 drehfest verbunden ist. Der Drehantrieb 4 vermag die Säule 131 und damit den Transporttisch 13 um 360° zu drehen, was mit dem Bezugszeichen D gekennzeichnet ist. Durch die Verwendung eines Positionssensors oder eines Servomotors können beliebige Drehwinkel eingestellt und somit die Transportrichtung L um beliebige Winkel geändert werden.

Der Transportantrieb 3 ist an dem Transporttisch 13 gehaltert. D.h. der Transportantrieb 3 wird bei dem Drehen D des Transporttisches 13 mitbewegt. Der Transportantrieb 3 umfasst ein Förderband 31 mit zwei quer zu der Transportrichtung L zueinander beabstandeten Förderbändern 31, die über Umlenkrollen 32a und 32b endlos umlaufend geführt sind. Die beiden Förderbänder 31 durchsetzen zwei in die Platte 14 eingebrachte Öffnungen 17a, 17b. Das obere Trum 31o eines jeweiligen Förderbandes 31 verläuft daher oben auf der Transportfläche 14b des Transporttisches 13. Das untere Trum 31u des jeweiligen Förderbandes 31 sowie der Antriebsmotor 33 der Linearfördervorrichtung sind unterhalb der Transportfläche 14, also innerhalb des geschlossenen Gehäuses 16 angeordnet. Der Antriebsmotor 33 ist über ein Getriebe mit einer dritten Umlenkrolle 32c verbunden und treibt über diese eines der Förderbänder 31 an. Die beiden Umlenkrollen 32b sind über eine Achse drehfest miteinander gekoppelt, so dass der Antriebsmotor 33 letztlich beide Förderbänder 31 synchron antreibt.

Die Figur 2 zeigt einen Transportbehälter 91. Der Transportbehälter 91 weist einen Aufnahmeraum auf, der loses Transportgut insbesondere Einzelteile, beispielsweise optische Linsen (z.B. Brillenlinsen) oder lose einzelne Bauteile (z.B. Brillenfassungen) oder Ausgangsmaterialien aufnehmen kann. An dem Transportbehälter 91 ist ein RFID-Tag angeordnet, auf dem Daten zu dem Transportgut, also beispielsweise zu der optischen Linse gespeichert sind. Der Transporttisch 13 weist einen RFID-Transponder 26 auf, um Daten des RFID-Tags zu lesen oder zu schreiben. Sofern es sich bei dem Transportgut um Rohlinge zur Herstellung von optischen Linsen handelt, können über den RFID-Tag Daten der herzustellenden Linse gespeichert werden, die zur Einstellung oder Steuerung von Bearbeitungsmaschinen dienen.

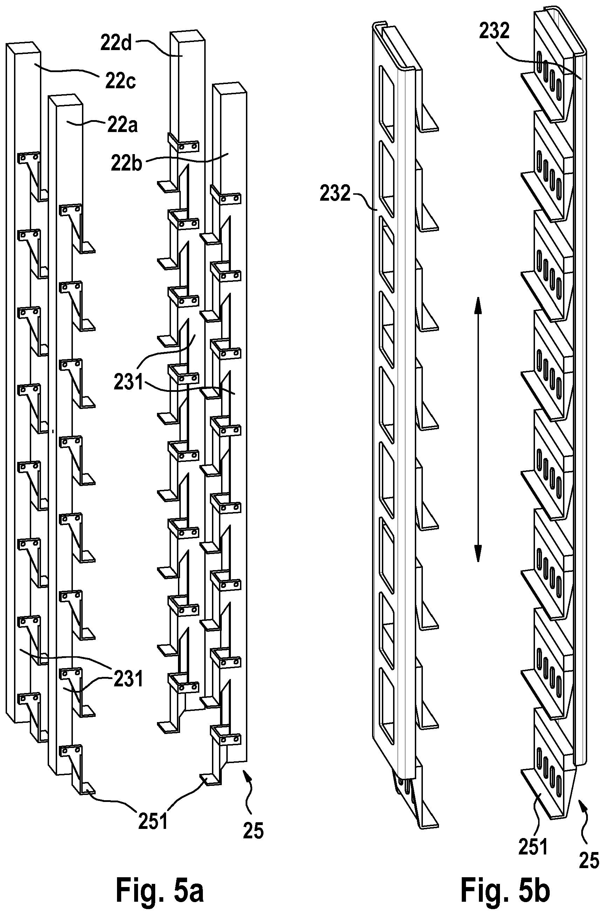

Der Transportbehälter 91 weist zudem eine Nut 911 auf. Die Nut 911 kann mit einer Halteschiene 251 zusammenwirken um den Transportbehälter 91 zu halten oder entlang einer nachfolgend im Zusammenhang mit den Figuren 5a und 5b beschriebenen Halteschiene 251 in einer geraden Richtung zu führen.

Um einen störungsfreien Transport der Transportbehälter 91 sicherzustellen, weist der Transporttisch 13 zwei Leitbleche 15 auf, die beiderseits der Förderbänder 31 angeordnet sind. Der Abstand der beiden Leitbleche 15 zueinander ist auf die Quererstreckung der zu transportierenden Transportbehälter 91 abgestimmt. D.h. der Abstand der beiden Leitbleche 15 zueinander ist etwas größer bemessen als die maximale Quererstreckung eines zu transportierenden Transportbehälters 91. Ein Leitblech 15 weist einen vertikal verlaufenden Schenkel auf, der eine linksseitige bzw. rechtsseitige Anlage ausbildet, an der ein Transportbehälter 91 entlanggleiten kann. So wird verhindert, dass ein Transportbehälter 91 bei dem Transport nach links oder rechts von dem Förderband 31 abgleitet.

Wie in Figur 1a dargestellt, ist die Transportfläche 14 mit Ausnehmungen 14a versehen. Die Ausnehmungen 14a sind derart bemessen, dass beispielsweise ein Finger einer menschlichen Hand nicht in diese Ausnehmungen eingreifen kann. Die Ausnehmungen 14a sind daher in ihrer Ausnehmungsbreite 14c kleiner oder gleich 5 mm. Zudem ist das Spaltmaß 19a des Spalts 19 zwischen dem feststehenden Kreiszylinder 11 und der bewegten Außenkante der Platte 14 kleiner gleich 5 mm. Auch das obere Trum 31o des Förderbandes 31 ist oberhalb der Transportfläche 14b mit einem Abstand kleiner gleich 5mm geführt. Durch diese Abmessungen wird ein Hindurchgreifen von Fingern bzw. Fingerkuppen in die Ausnehmungen 14a bzw. in vorhandene Spalte 18, 19 sicher vermieden. Somit wird eine hohe Bediensicherheit für Bedienpersonen geschaffen.

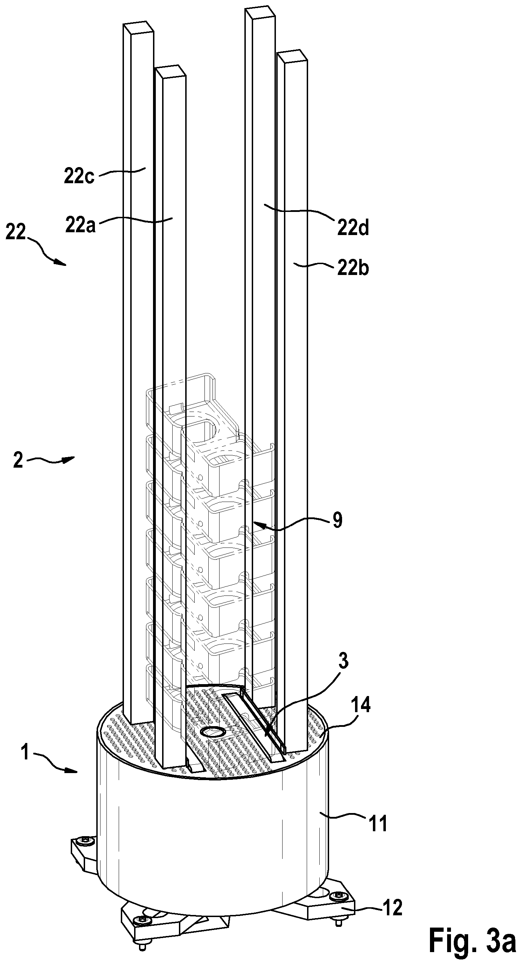

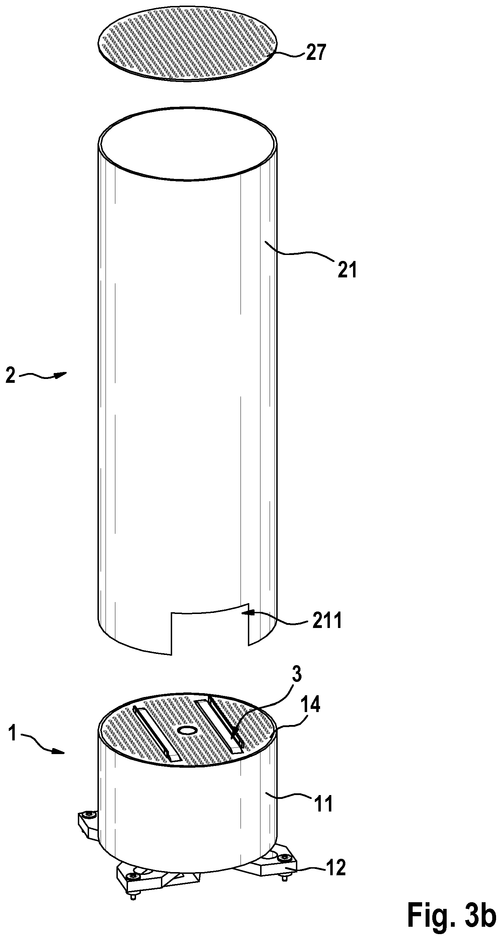

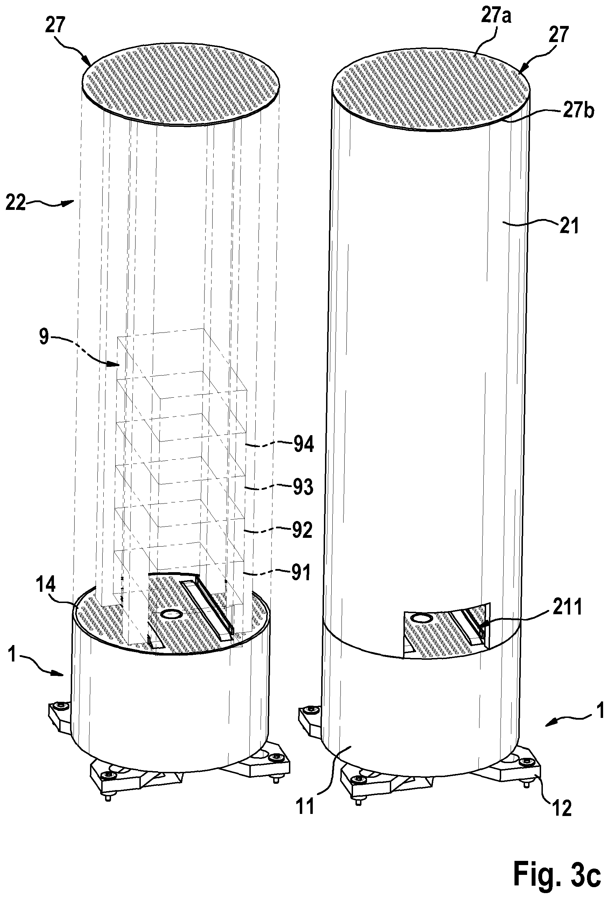

Die Figuren 3a bis 3c zeigen die Fördervorrichtung 1 aufgerüstet mit einem optionalen Modul zu einer Lagervorrichtung 2. Figur 3a zeigt die Fördervorrichtung 1 mit Lagervorrichtung 2 in schematischer Darstellung und ohne schützenden zweiten Zylinder 21. Figur 3b zeigt eine Explosionsdarstellung der Fördervorrichtung 1. Die Figur 3c zeigt in der linken Darstellung das Innenleben und in der rechten Darstellung eine Außenansicht der Fördervorrichtung 1 mit Lagervorrichtung 2.

Die Fördervorrichtung 1 weist einen ersten Zylinder 11 und einen zweiten Zylinder 21 auf, der mit dem ersten Zylinder 11 verbunden ist und diesen nach oben verlängert. Der zweite Zylinder 21 dient als Berührschutz und verhindert, dass Bedienpersonal sich an bewegten Teilen der Lagervorrichtung 2 einklemmen kann. Der zweite Zylinder 21 weist an seiner Unterseite Öffnungen 211 auf, durch die ein Transportbehälter 91 in den zweiten Zylinder 21 hinein oder aus dem zweiten Zylinder 21 heraus transportiert werden kann. Der Transport der Transportbehälter 91 erfolgt dabei durch den Transportantrieb 3 der der Linearfördereinheit der Fördervorrichtung 1.

An seiner Oberseite ist der zweite Zylinder 21 durch ein Abdeckgitter 27 abgedeckt. Das Abdeckgitter 27 ist als rundes Abdeckgitter 27 ausgebildet und entspricht in seinen Abmessungen der Platte 14. Das Abdeckgitter 27 weist Öffnungen 27a auf, die derart bemessen sind, dass diese in zumindest ihrer Öffnungsbreite 27b kleiner oder gleich 5 mm sind. Zudem deckt das Abdeckgitter 27 eine solche Fläche ab, dass in senkrechter Projektion die Fördervorrichtung 2 eine Flächenüberdeckung von weniger als 60%, vorzugsweise weniger als 50% aufweist. Damit kann die Fördervorrichtung 2 mit einem laminaren Strom von gereinigter Luft umspült werden, ohne dass in der laminaren Strömung zu viele Turbulenzen entstehen.

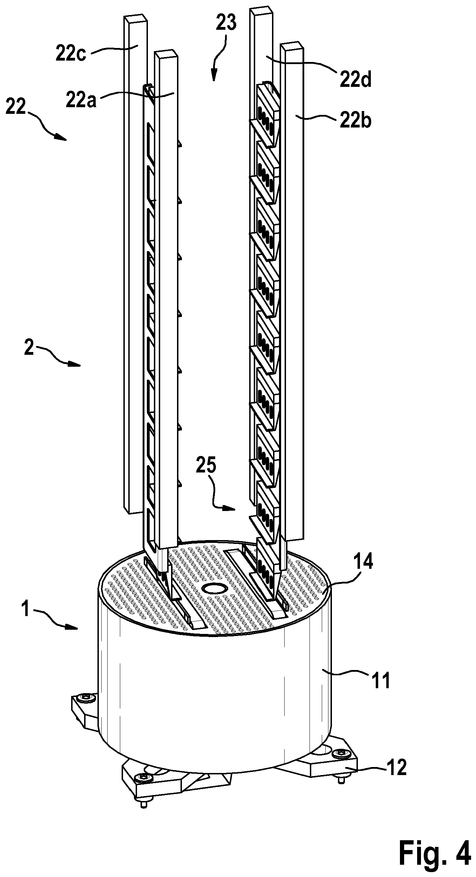

Die Fördervorrichtung 2 weist einen Rahmen 22 mit vertikal verlaufenden Schienen 22a, 22b, 22c und 22d auf. Diese vertikalen Schienen 22a, 22b, 22c und 22d sind an ihrer Unterseite der Platte 14 bzw. mit dem Transporttisch 13 lösbar verbunden. Der Abstand der vertikalen Schienen 22a, 22b, 22c und 22d ist auf die Abmessungen der Transportbehälter 91 abgestimmt. In dem dargestellten Beispiel handelt es sich um einen Stapel 9 aus mehreren Transportbehältern 91, 92, 93 und 94. Der Stapel 9 ist an den vertikal verlaufenden Schienen 22a, 22b, 22c und 22d über eine in den Figuren 4 bis 5b gezeigte Haltevorrichtung 25 gehaltert.

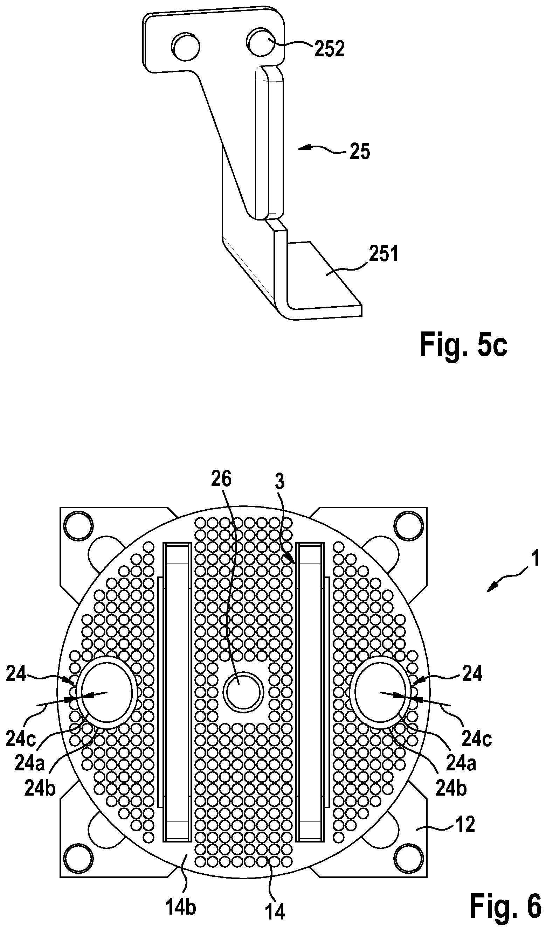

Um einen Transportbehälter 91, 92, 93, 94 in den Stapel 9 zu überführen, ist ein Hubantrieb 23 vorgesehen. Der Hubantrieb 23 kann einen Hubmotor aufweisen, der an dem Rahmen 22 angeordnet ist. Wie in den Figuren 5a und 5b dargestellt, ist der Hubantrieb zweiteilig aufgebaut. Er weist erste feststehende Teile 231 auf, die an den vertikalen Schienen 22a, 22b, 22c und 22d gehaltert sind (Figur 5a). Ein zweites Teil 232 ist an diesen vertikal verschiebbar gelagert (Figur 5b). Beide Teile 231 und 232 weisen horizontal verlaufende Führungsschienen 251 auf, die in die Nut 911 eines Transportbehälters 91 eingreifen um diesen zu halten. Wie in der Figur 5c dargestellt ist, sind die Halteschienen 251 an dem Hubantrieb 23, also an dem ersten Teil 231 oder dem zweiten Teil 232 jeweils um eine Schwenkachse 252 schwenkbar gelagert. Über einen Hubmagnet können die Haltescheinen 251 aus der Nut 911 eines Transportbehälters 91 herausgeschwenkt werden.

Das Anheben eines Transportbehälters 91 geschieht wie folgt: Ein Transportbehälter 91 wird durch die Öffnung 211 gefördert und gleitet dabei mit der Nut 911 auf die Halteschiene 251 des ersten und zweiten Teils des Hubantriebs 23. Anschließend werden die Halteschienen des feststehenden Teils 231 ausgeschwenkt, so dass der Transportbehälter 91 nur noch von den Halteschienen des beweglichen Teils 232 gehalten wird. Dieses wird dann nach oben verfahren und nimmt dabei den Transportbehälter 91 mit. An der Zielposition angekommen werden die Halteschienen des feststehenden Teils 231 wieder in die Nut 911 eingeschwenkt und halten den Transportbehälter 91 fest. Danach können die Halteschienen des beweglichen Teils 232 gelöst und das bewegliche Teil 232 wieder nach unten verfahren werden. Das Absenken eines Transportbehälters 91 erfolgt sinngemäß in umgekehrter Reihenfolge.

Alternativ oder ergänzend können Hubzylinder 24 vorgesehen sein, die in dem Gehäuse 16 der Fördervorrichtung 1 angeordnet sind. Wie in Figur 6 gezeigt, sind die Hubzylinder 24 unterhalb der Transportfläche 14b angeordnet. Ein pneumatisch oder hydraulisch angetriebener Hubstempel eines Hubzylinders 24 durchgreift die Transportfläche 14b durch eine Öffnung 24a und fährt nach oben aus um einen Transportbehälter 91 anzuheben. Das Spaltmaß 24c des Spalts 24b zwischen dem Hubzylinder 24 und der Transportfläche 14b beträgt dabei weniger als 5 mm um Quetsch- oder Scherstellen zu vermeiden.

Die Fördervorrichtung 1 speichert Transportbehälter 91 dabei als FILO-Speicher. Das bedeutet, dass der zuerst in den Speicher eingelagerte Transportbehälter 91 als letzter wieder ausgegeben wird. Über den Drehantrieb 4 der Fördervorrichtung 1 kann die Lagervorrichtung 2 gedreht werden um die Transportrichtung L der einzulagernden oder ausgegebenen Transportbehälter 91 zu ändern. Wesentlich dabei ist, dass der äußere Zylinder 21 der Lagervorrichtung 2 und der äußere Zylinder 11 der Dreh- und Linearfördereinheiten der Fördervorrichtung 1 feststehend sind, also sich bei der Drehung D nicht bewegen um die Quetschgefahr oder Schergefahr zu verringern.

Weiter ist vorgesehen, dass die Öffnung 211 auf die Abmessungen eines Transportbehälters 91 so abgestimmt ist, dass zwischen einem Transportbehälter 91 und der Öffnung 211 ein Spalt von kleiner gleich 5 mm ist. So kann das Einklemmen von Fingern währen der Eingabe oder Ausgabe von Transportbehältern 91 verhindert werden. Außerdem kann die Antriebskraft des Transportantriebs 3 auf ungefährliche Werte begrenzt werden, so dass die Verletzungsgefahr sinkt.

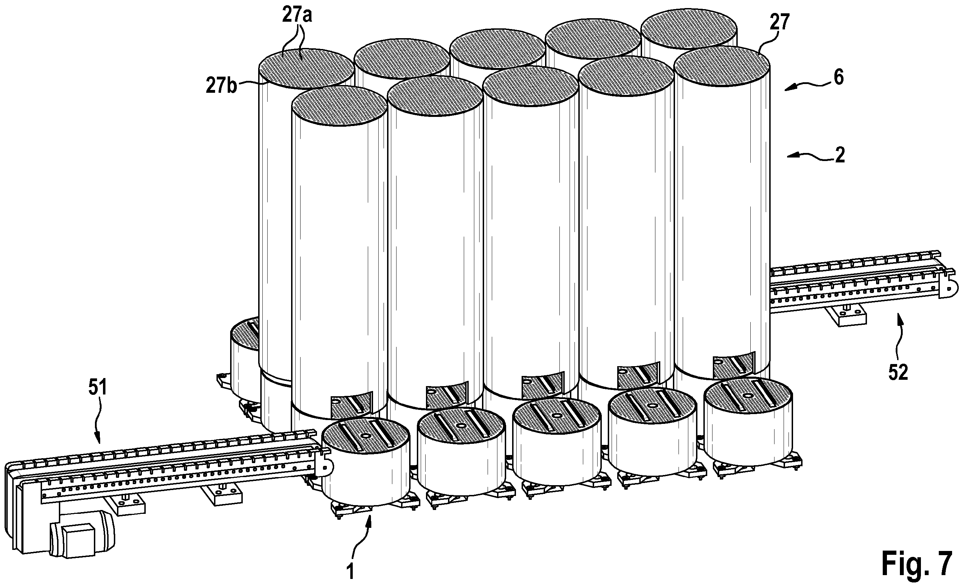

Die Figur 7 zeigt eine Speicheranordnung mit einer Matrix umfassend mehrere Fördervorrichtungen 1 mit Lagervorrichtung 2. Es handelt sich um eine 5x2 - Matrix von Fördervorrichtungen 2 die jeweils an 5 Fördereinrichtungen 1 ohne Lagervorrichtung angeschlossen sind. Über ein Zuführband 51 werden Transportbehälter 91, 92, 93, 94 den Fördervorrichtungen 1 und damit der Speicheranordnung zugeführt. Ein Abführband 52 transportiert aus der Speicheranordnung ausgegebene Transportbehälter 91, 92, 93, 94 weiter.

Der Transport von Transportbehältern 91, 92, 93, 94 erfolgt indem das Zuführband 51, einen Transportbehälter 91, auf den Transportantrieb 3 einer Fördervorrichtung 1 so weit aufschiebt, bis das Förderband 31 oder die Förderbänder 31 des Transportantriebs 3 den Transportbehälter 91 greifen und weitertransportieren können. Der Abtransport erfolgt, indem die Förderbänder 31 des Transportantriebs 3 einer Fördervorrichtung 1 den Transportbehälter 91 so weit auf das Abführband 52 aufschieben, dass dieses den Transportbehälter 91 übernehmen und weiter zu transportieren vermag.

Jeweils zwei benachbarte Fördervorrichtungen 2 sind zusammengeschaltet. Diese bilden gemeinsam eine FIFO-Speicheranordnung aus. Das bedeutet, dass ein zuerst eingegebener Transportbehälter 91, 92, 93, 94 als erstes wieder ausgegeben wird. Die Transportbehälter 91, 92, 93, 94 werden entlang der in Figur 7 durch Pfeile angedeuteten Transportrichtung durch die Lagervorrichtungen 2 transportiert. An der Oberseite der Lagervorrichtungen 2 ist jeweils eine Horizontaltransportvorrichtung 6 angeordnet. Diese transportiert den jeweils obersten Transportbehälter 94 eines Stapels 9 horizontal und übergibt diesen an die benachbarte Lagervorrichtung 2. Ein Transportbehälter 91 wandert also in der ersten Lagervorrichtung 2 nach oben, wird horizontal an die zweite Lagervorrichtung 2 übergeben. Dort wandert der Transportbehälter 91 wieder nach unten. So wird eine FIFO-Speicheranordnung umgesetzt.

Um bei einer direkt benachbarten Anordnung der Fördervorrichtungen 1 mögliche Quetschstellen oder Scherstellen zu verhindern kann zudem vorgesehen sein, dass Sensoren vorgesehen sind, die überwachen, ob sich auf einer benachbarten Fördervorrichtung 1 oder einer benachbarten Transportfläche 14b ein Transportbehälter 91, 92, 93, 94 befindet, um dann eine Drehung D zu unterbinden. Als Sensoren können beispielsweise Kameras oder Lichtschranken verwendet werden.

Die erfindungsgemäße Fördervorrichtung 1 kann entweder in Alleinstellung als Einzelgerät für Transportzwecke oder optional als Kombination mehrerer Fördervorrichtungen 1 verwendet werden., Die Fördervorrichtungen 1 können unmittelbar nebeneinander oder hintereinander angeordnet sein, um komplexe Verteilaufgaben zu realisieren. Auch ein größeres Lager kann vorgesehen sein, indem eine Vielzahl von Fördervorrichtungen 1 kombiniert und in Form einer N x M - Matrix, beispielsweise einer 6 x 4 Matrix, zu einer größeren Lagereinheit kombiniert werden. In einem solchen Lager können beispielsweise Einzelteile bevorratet werden, die in den jeweiligen Transportbehältern 91, 92, 93, 94 enthalten sind. Auch kann eine Reihenschaltung mehrerer Lagervorrichtungen 1 vorgesehen sein, um beispielsweise die Lagerkapazität zu erhöhen oder die Durchlaufzeit zu steigern. Eine lange Durchlaufzeit ist beispielsweise von Vorteil, wenn die Fördervorrichtung 1 als Abkühllager für erhitzte Bauteile verwendet wird.

Über eine entsprechende Steuerungsvorrichtung ist es beispielsweise möglich, solche eingelagerten Einzelteile in der benötigten Reihenfolge einer Fertigung zuzuführen. Dabei ist vorgesehen, dass jede Fördervorrichtung für sich genommen als sogenannte Last In - First Out Lagervorrichtung organisiert ist oder jeweils zwei Fördervorrichtungen 1 zu einer First in - First Out Lagervorrichtung kombiniert sind. Durch die kompakte Bauweise benötigt ein solches Lager nur eine relativ kleine Stellfläche.

### Bezugszeichenliste

- 1: Fördervorrichtung
- 11: erster Zylinder
- 12: Sockel
- 13: Transporttisch
- 131: Säule
- 14: Platte
- 14a: Ausnehmungen
- 14b: Ebene
- 14c: Öffnungsbreite
- 15: Leitblech
- 16: Gehäuse
- 17a: Öffnung
- 17b: Öffnung
- 18: Spalt
- 18a: Spaltmaß
- 19: Spalt
- 19a: Spaltmaß
- 2: Lagermodul
- 21: zweiter Zylinder
- 211: Öffnung
- 22: Rahmen
- 22a: erste vertikale Schiene
- 22b: zweite vertikale Schiene
- 22c: dritte vertikale Schiene
- 22d: vierte vertikale Schiene
- 23: Hubantrieb
- 231: feststehendes Teil
- 232: verfahrbares Teil
- 24: Hubzylinder
- 24a: Öffnung
- 24b: Spalt
- 24c: Spaltmaß
- 25: Haltevorrichtung
- 251: Halteschiene
- 252: Schwenkachse
- 26: RFID-Transponder
- 26a: Öffnung
- 26b: Spalt
- 26b: Spaltmaß
- 27: Gitter
- 27a: Öffnung
- 27b: Öffnungsbreite
- 3: Transportantrieb
- 31: Förderband
- 31o: oberes Trum
- 31u: unteres Trum
- 32: Antriebswelle
- 32a: erste Umlenkrolle
- 32b: zweite Umlenkrolle
- 32c: dritte Umlenkrolle
- 33: Transportmotor
- 4: Drehantrieb
- 41: Drehantriebsmotor
- 42: Zahnriemen
- 51: Zuführband
- 52: Abführband
- 6: Horizontaltransportvorrichtung
- 9: Stapel
- 91: erster Transportbehälter
- 911: Nut
- 92: zweiter Transportbehälter
- 93: dritter Transportbehälter
- 94: vierter Transportbehälter

- A: Drehachse
- D: Drehrichtung
- L: Linearförderrichtung

## Patentansprüche

1. NxM-Matrix umfassend unmittelbar nebeneinander oder hintereinander angeordnete Fördervorrichtungen (1) für einen Transportbehälter (91, 92, 93, 94) für Brillenlinsen, wobei jede der Fördervorrichtungen (1) umfasst:
- eine Linearfördereinheit (3, 31) zum Fördern des Transportbehälters (91, 92) in einer geradlinigen Richtung (L)
- eine Dreheinheit (4, 41, 42) zum Drehen (D) der Linearfördereinheit (3, 31)
- ein eine Ebene (14b) aufweisendes und sich beim Drehen (D) der Linearfördereinheit (3, 31) mit drehendes erstes Gehäuseelement (14) für die Dreheinheit (4, 41, 42), wobei das sich beim Drehen (D) der Linearfördereinheit (3, 31) mit drehende erste Gehäuseelement (14) eine oder mehrere erste Öffnungen (17a, 17b) aufweist, durch die die Linearfördereinheit (3, 31) die Ebene (14b) durchsetzt, wobei die Linearfördereinheit (3, 31) durch ein oder mehrere Spalte (18) mit zugeordneten Spaltmaßen (18a) von der Ebene (14b) beabstandet ist, wobei
- die Spaltmaße (18a) sämtlicher Spalte (18) kleiner oder gleich 5 mm sind, wobei
- das erste Gehäuseelement (14) keine weiteren oder eine Mehrzahl an die Ebene (14b) durchdringende zweite Öffnungen (14a) mit zugeordneten Öffnungsbreiten (14c) aufweist, wobei die Öffnungsbreiten (14c) sämtlicher zweiter Öffnungen (14a) kleiner oder gleich 5 mm sind, wobei
- ein die Dreheinheit (4, 41, 42) umschließendes feststehendes kreiszylinderförmiges zweites Gehäuseelement (11) vorhanden ist, welches sich beim Drehen (D) der Linearfördereinheit (3, 31) nicht mit dreht, wobei
- die Ebene (14b) des sich beim Drehen (D) der Linearfördereinheit (3, 31) mit drehenden ersten Gehäuseelements (14) innerhalb des feststehenden zweiten Gehäuseelements (11) befindet und formkomplementär zum feststehenden zweiten Gehäuseelement (11) ausgebildet ist, wobei
- die Dreheinheit (4, 41, 42) und sämtliche angetriebenen Komponenten der Fördervorrichtung (1) vollständig innerhalb des kreiszylinderförmigen zweiten Gehäuseelements (11) angeordnet sind und wobei
- das kreiszylinderförmige zweite Gehäuseelement (11) als in sich geschlossene Mantelfläche ausgebildet ist, die keine oder eine Mehrzahl an runden oder eckigen Öffnungen aufweist, deren Durchmesser oder deren lichte Breite oder lichte Länge kleiner oder gleich 5 mm sind.

2. Verwendung einer Fördervorrichtung (1) für einen Transportbehälter (91, 92, 93, 94) für Brillenlinsen in einer NxM-Matrix aus einer Mehrzahl dieser Fördervorrichtungen (1), die unmittelbar nebeneinander oder hintereinander angeordnet sind, wobei die Fördervorrichtung (1) umfasst:
- eine Linearfördereinheit (3, 31) zum Fördern des Transportbehälters (91, 92) in einer geradlinigen Richtung (L)
- eine Dreheinheit (4, 41, 42) zum Drehen (D) der Linearfördereinheit (3, 31)
- ein eine Ebene (14b) aufweisendes und sich beim Drehen (D) der Linearfördereinheit (3, 31) mit drehendes erstes Gehäuseelement (14) für die Dreheinheit (4, 41, 42), wobei das sich beim Drehen (D) der Linearfördereinheit (3, 31) mit drehende erste Gehäuseelement (14) eine oder mehrere erste Öffnungen (17a, 17b) aufweist, durch die die Linearfördereinheit (3, 31) die Ebene (14b) durchsetzt, wobei die Linearfördereinheit (3, 31) durch ein oder mehrere Spalte (18) mit zugeordneten Spaltmaßen (18a) von der Ebene (14b) beabstandet ist, wobei
- die Spaltmaße (18a) sämtlicher Spalte (18) kleiner oder gleich 5 mm sind, wobei
- das erste Gehäuseelement (14) keine weiteren oder eine Mehrzahl an die Ebene (14b) durchdringende zweite Öffnungen (14a) mit zugeordneten Öffnungsbreiten (14c) aufweist, wobei die Öffnungsbreiten (14c) sämtlicher zweiter Öffnungen (14a) kleiner oder gleich 5 mm sind, wobei
- ein die Dreheinheit (4, 41, 42) umschließendes feststehendes kreiszylinderförmiges zweites Gehäuseelement (11) vorhanden ist, welches sich beim Drehen (D) der Linearfördereinheit (3,31) nicht mit dreht, und wobei
- die Ebene (14b) des sich beim Drehen (D) der Linearfördereinheit (3, 31) mit drehenden ersten Gehäuseelements (14) innerhalb des feststehenden zweiten Gehäuseelements (11) befindet und formkomplementär zum feststehenden zweiten Gehäuseelement (11) ausgebildet ist, wobei
- die Dreheinheit (4, 41, 42) und sämtliche angetriebenen Komponenten der Fördervorrichtung (1) vollständig innerhalb des kreiszylinderförmigen zweiten Gehäuseelements (11) angeordnet sind und wobei
- das kreiszylinderförmige zweite Gehäuseelement (11) als in sich geschlossene Mantelfläche ausgebildet ist, die keine oder eine Mehrzahl an runden oder eckigen Öffnungen aufweist, deren Durchmesser oder deren lichte Breite oder lichte Länge kleiner oder gleich 5 mm sind.

3. Fördervorrichtung (1) für einen Transportbehälter (91, 92, 93, 94) für Brillenlinsen, mit
- einer Linearfördereinheit (3, 31) zum Fördern des Transportbehälters (91, 92) in einer geradlinigen Richtung (L)
- einer Dreheinheit (4, 41, 42) zum Drehen (D) der Linearfördereinheit (3, 31)
- einem eine Ebene (14b) aufweisenden und sich beim Drehen (D) der Linearfördereinheit (3, 31) mit drehenden ersten Gehäuseelement (14) für die Dreheinheit (4, 41, 42), wobei das sich beim Drehen (D) der Linearfördereinheit (3, 31) mit drehende erste Gehäuseelement (14) eine oder mehrere erste Öffnungen (17a, 17b) aufweist, durch die die Linearfördereinheit (3, 31) die Ebene (14b) durchsetzt, wobei die Linearfördereinheit (3, 31) durch ein oder mehrere Spalte (18) mit zugeordneten Spaltmaßen (18a) von der Ebene (14b) beabstandet ist,
**dadurch gekennzeichnet, dass**
- die Spaltmaße (18a) sämtlicher Spalte (18) kleiner oder gleich 5 mm sind und dass das erste Gehäuseelement (14) keine weiteren oder eine Mehrzahl an die Ebene (14b) durchdringende zweite Öffnungen (14a) mit zugeordneten Öffnungsbreiten (14c) aufweist, wobei die Öffnungsbreiten (14c) sämtlicher zweiter Öffnungen (14a) kleiner oder gleich 5 mm sind, wobei
- ein die Dreheinheit (4, 41, 42) umschließendes feststehendes kreiszylinderförmiges zweites Gehäuseelement (11) vorhanden ist, welches sich beim Drehen (D) der Linearfördereinheit (3, 31) nicht mit dreht, und wobei
- die Ebene (14b) des sich beim Drehen (D) der Linearfördereinheit (3, 31) mit drehenden ersten Gehäuseelements (14) innerhalb des feststehenden zweiten Gehäuseelements (11) befindet und formkomplementär zum feststehenden zweiten Gehäuseelement (11) ausgebildet ist, wobei
- die Dreheinheit (4, 41, 42) vollständig innerhalb des kreiszylinderförmigen zweiten Gehäuseelements (11) angeordnet ist und wobei
- das kreiszylinderförmige zweite Gehäuseelement (11) als in sich geschlossene Mantelfläche ausgebildet ist, die keine oder eine Mehrzahl an runden oder eckigen Öffnungen aufweist, deren Durchmesser oder deren lichte Breite oder lichte Länge kleiner oder gleich 5 mm sind, wobei
eine Haltevorrichtung (25) vorhanden ist, um den Transportbehälter (91, 92, 93, 94) in einem Abstand oberhalb der Ebene (14b) zu haltern, wobei
- eine Hubeinrichtung (23) vorhanden ist, um den Transportbehälter (91, 92) in vertikaler Richtung von der Ebene (14a) anzuheben und/oder auf die Ebene (14b) abzusenken und wobei
- die Hubeinrichtung (23) eingerichtet ist, den Transportbehälter (91, 92) auf einen Abstand oberhalb der Ebene (14b) anzuheben, so dass die Haltevorrichtung (25) den Transportbehälter (91, 92, 93, 94) halten kann, wobei die Hubeinrichtung (23) einen oder mehrere Hubzylinder (24) aufweist, um den Transportbehälter (91, 92, 93, 94) in vertikaler Richtung anzuheben oder abzusenken, wobei das sich beim Drehen (D) der Linearfördereinheit (3, 31) mit drehende erste Gehäuseelement (14) eine oder mehrere vierte Öffnungen (24a) aufweist, durch die der eine oder die mehreren Hubzylinder (24) die Ebene (14b) durchsetzt bzw. durchsetzen.

4. Fördervorrichtung (1) nach Anspruch 3, **dadurch gekennzeichnet, dass** der eine oder die mehreren Hubzylinder (24) durch einen oder mehrere Spalte (24b) mit zugeordneten Spaltmaßen (24c) von der Ebene (14b) beabstandet ist bzw. sind, und dass die Spaltmaße (24c) sämtlicher Spalte (24b) kleiner oder gleich 5 mm sind.

## Claims

1. NxM matrix comprising, arranged directly alongside one another or behind one anther, conveyor devices (1) for a transport container (91, 92, 93, 94) for spectacle lenses, wherein each of the conveyor devices (1) comprises:
- a linear conveyor unit (3, 31) for conveying the transport container (91, 92) in a rectilinear direction (L),
- a rotary unit (4, 41, 42) for rotation (D) of the linear conveyor unit (3, 31),
- a first housing element (14) for the rotary unit (4, 41, 42), said first housing element (14) having a plane (14b) and conjointly rotating with the rotation (D) of the linear conveyor unit (3, 31), wherein the first housing element (14), conjointly rotating with the rotation (D) of the linear conveyor unit (3, 31), has one or more first openings (17a, 17b) through which the linear conveyor unit (3, 31) passes through the plane (14b), wherein the linear conveyor unit (3, 31) is spaced apart from the plane (14b) by one or more gaps (18) with associated gap dimensions (18a), wherein
- the gap dimensions (18a) of all the gaps (18) are smaller than or equal to 5 mm, wherein
- the first housing element (14) has no further openings or a plurality of second openings (14a) with associated opening widths (14c), said second openings (14a) passing through the plane (14b), wherein the opening widths (14c) of all of the second openings (14a) are smaller than or equal to 5 mm, wherein
- a stationary circular-cylindrical second housing element (11) is present, which encloses the rotary unit (4, 41, 42) and does not conjointly rotate with the rotation (D) of the linear conveyor unit (3, 31), wherein
- the plane (14b) of the first housing element (14) conjointly rotating with the rotation (D) of the linear conveyor unit (3, 31) is located within the stationary second housing element (11) and is configured to have a shape complementary to the stationary second housing element (11), wherein
- the rotary unit (4, 41, 42) and all of the driven components of the conveyor device (1) are arranged completely within the circular-cylindrical second housing element (11), and wherein
- the circular-cylindrical second housing element (11) is configured as a closed shell surface which has no openings or a plurality of round or angular openings, of which the diameter or clear width or clear length is smaller than or equal to 5 mm.

2. Use of a conveyor device (1) for a transport container (91, 92, 93, 94) for spectacle lenses in a NxM matrix composed of a plurality of these conveyor devices (1) arranged directly alongside one another or behind one another, wherein the conveyor device (1) comprises:
- a linear conveyor unit (3, 31) for conveying the transport container (91, 92) in a rectilinear direction (L),
- a rotary unit (4, 41, 42) for rotation (D) of the linear conveyor unit (3, 31),
- a first housing element (14) for the rotary unit (4, 41, 42), said first housing element (14) having a plane (14b) and conjointly rotating with the rotation (D) of the linear conveyor unit (3, 31), wherein the first housing element (14), conjointly rotating with the rotation (D) of the linear conveyor unit (3, 31), has one or more first openings (17a, 17b) through which the linear conveyor unit (3, 31) passes through the plane (14b), wherein the linear conveyor unit (3, 31) is spaced apart from the plane (14b) by one or more gaps (18) with associated gap dimensions (18a), wherein
- the gap dimensions (18a) of all the gaps (18) are smaller than or equal to 5 mm, wherein
- the first housing element (14) has no further openings or a plurality of second openings (14a) with associated opening widths (14c), said second openings (14a) passing through the plane (14b), wherein the opening widths (14c) of all of the second openings (14a) are smaller than or equal to 5 mm, wherein
- a stationary circular-cylindrical second housing element (11) is present, which encloses the rotary unit (4, 41, 42) and does not conjointly rotate with the rotation (D) of the linear conveyor unit (3, 31), and wherein
- the plane (14b) of the first housing element (14) conjointly rotating with the rotation (D) of the linear conveyor unit (3, 31) is located within the stationary second housing element (11) and is configured to have a shape complementary to the stationary second housing element (11), wherein
- the rotary unit (4, 41, 42) and all of the driven components of the conveyor device (1) are arranged completely within the circular-cylindrical second housing element (11), and wherein
- the circular-cylindrical second housing element (11) is configured as a closed shell surface which has no openings or a plurality of round or angular openings, of which the diameter or clear width or clear length is smaller than or equal to 5 mm.

3. Conveyor device (1) for a transport container (91, 92, 93, 94) for spectacle lenses, with:
- a linear conveyor unit (3, 31) for conveying the transport container (91, 92) in a rectilinear direction (L),
- a rotary unit (4, 41, 42) for rotation (D) of the linear conveyor unit (3, 31),
- a first housing element (14) for the rotary unit (4, 41, 42), said first housing element (14) having a plane (14b) and conjointly rotating with the rotation (D) of the linear conveyor unit (3, 31), wherein the first housing element (14), conjointly rotating with the rotation (D) of the linear conveyor unit (3, 31), has one or more first openings (17a, 17b) through which the linear conveyor unit (3, 31) passes through the plane (14b), wherein the linear conveyor unit (3, 31) is spaced apart from the plane (14b) by one or more gaps (18) with associated gap dimensions (18a), **characterized in that**
- the gap dimensions (18a) of all the gaps (18) are less than or equal to 5 mm, and that the first housing element (14) has no further openings or a plurality of second openings (14a) with associated opening widths (14c), said second openings (14a) passing through the plane (14b), wherein the opening widths (14c) of all of the second openings (14a) are smaller than or equal to 5 mm, wherein
- a stationary circular-cylindrical second housing element (11) is present, which encloses the rotary unit (4, 41, 42) and does not conjointly rotate with the rotation (D) of the linear conveyor unit (3, 31), and wherein
- the plane (14b) of the first housing element (14) conjointly rotating with the rotation (D) of the linear conveyor unit (3, 31) is located within the stationary second housing element (11) and is configured to have a shape complementary to the stationary second housing element (11), wherein
- the rotary unit (4, 41, 42) is arranged completely within the circular-cylindrical second housing element (11), and wherein
- the circular-cylindrical second housing element (11) is configured as a closed shell surface which has no openings or a plurality of round or angular openings, of which the diameter or clear width or clear length is smaller than or equal to 5 mm, wherein
a holding device (25) is present for holding the transport container (91, 92, 93, 94) at a distance above the plane (14b), wherein
- a lifting apparatus (23) is present for lifting the transport container (91, 92) in a vertical direction from the plane (14a) and/or for lowering the transport container (91, 92) onto the plane (14b), and wherein
- the lifting apparatus (23) is configured to lift the transport container (91, 92) to a distance above the plane (14b), such that the holding device (25) can hold the transport container (91, 92, 93, 94), wherein the lifting apparatus (23) has one or more lifting cylinders (24) configured to lift or lower the transport container (91, 92, 93, 94) in the vertical direction, wherein the first housing element (14), conjointly rotating with the rotation (D) of the linear conveyor unit (3, 31), has one or more fourth openings (24a), through which the one or more lifting cylinders (24) pass through the plane (14b).

4. Conveyor device (1) according to Claim 3, **characterized in that** the one or more lifting cylinders (24) are spaced apart from the plane (14b) by one or more gaps (24b) with associated gap dimensions (24c), and **in that** the gap dimensions (24c) of all the gaps (24b) are smaller than or equal to 5 mm.

## Revendications

1. Matrice NxM comprenant des dispositifs de convoyage (1), disposés directement les uns à côté des autres ou les uns derrière les autres, pour un récipient de transport (91, 92, 93, 94) pour des verres de lunette, chaque dispositif de convoyage (1) comportant :
- une unité de convoyage linéaire (3, 31) destinée à convoyer le récipient de transport (91, 92) dans une direction rectiligne (L)
- une unité rotative (4, 41, 42) destinée à effectuer une rotation (D) de l'unité de convoyage linéaire (3, 31)
- un premier élément de boîtier (14) pour l'unité rotative (4, 41, 42), possédant un plan (14b) et accompagnant la rotation de l'unité de convoyage linéaire (3, 31) lors de sa rotation (D), le premier élément de boîtier (14) qui accompagne la rotation de l'unité de convoyage linéaire (3, 31) lors de sa rotation (D) possédant une ou plusieurs premières ouvertures (17a, 17b) à travers lesquelles l'unité de convoyage linéaire (3, 31) entrecoupe le plan (14b), l'unité de convoyage linéaire (3, 31) étant espacée du plan (14b) par un ou plusieurs interstices (18) ayant des cotes d'interstice (18a) associées,
- les cotes d'interstice (18a) de tous les interstices (18) étant égales ou inférieures à 5 mm,
- le premier élément de boîtier (14) ne possédant aucune deuxième ouverture supplémentaire ou une pluralité de deuxièmes ouvertures (14a) pénétrant au niveau du plan (14b) et ayant des largeurs d'ouverture (14c) associées, les largeurs d'ouverture (14c) de toutes les deuxièmes ouvertures (14a) étant inférieures ou égales à 5 mm,
- un deuxième élément de boîtier (11) de forme cylindrique creuse fixe qui entoure l'unité rotative (4, 41, 42) étant présent, lequel n'accompagne pas la rotation de l'unité de convoyage linéaire (3, 31) lors de sa rotation (D),
- le plan (14b) du premier élément de boîtier (14) qui accompagne la rotation de l'unité de convoyage linéaire (3, 31) lors de sa rotation (D) se trouvant à l'intérieur du deuxième élément de boîtier (11) fixe et étant de forme complémentaire au deuxième élément de boîtier (11) fixe,
- l'unité rotative (4, 41, 42) et tous les composants entraînés du dispositif de convoyage (1) étant disposés entièrement à l'intérieur du deuxième élément de boîtier (11) de forme cylindrique creuse et
- le deuxième élément de boîtier (11) de forme cylindrique creuse étant réalisé sous la forme d'une enveloppe fermée en elle-même, qui ne possède aucune ou une pluralité d'ouvertures rondes ou rectangulaires dont les diamètres on dont la largeur libre ou la longueur libre sont inférieurs ou égaux à 5 mm.

2. Utilisation d'un dispositif de convoyage (1) pour un récipient de transport (91, 92, 93, 94) pour des verres de lunette dans une matrice NxM constituée d'une pluralité de ces dispositifs de convoyage (1), qui sont disposés directement les uns à côté des autres ou les uns derrière les autres, le dispositif de convoyage (1) comportant :
- une unité de convoyage linéaire (3, 31) destinée à convoyer le récipient de transport (91, 92) dans une direction rectiligne (L)
- une unité rotative (4, 41, 42) destinée à effectuer une rotation (D) de l'unité de convoyage linéaire (3, 31)
- un premier élément de boîtier (14) pour l'unité rotative (4, 41, 42), possédant un plan (14b) et accompagnant la rotation de l'unité de convoyage linéaire (3, 31) lors de sa rotation (D), le premier élément de boîtier (14) qui accompagne la rotation de l'unité de convoyage linéaire (3, 31) lors de sa rotation (D) possédant une ou plusieurs premières ouvertures (17a, 17b) à travers lesquelles l'unité de convoyage linéaire (3, 31) entrecoupe le plan (14b), l'unité de convoyage linéaire (3, 31) étant espacée du plan (14b) par un ou plusieurs interstices (18) ayant des cotes d'interstice (18a) associées,
- les cotes d'interstice (18a) de tous les interstices (18) étant égales ou inférieures à 5 mm,
- le premier élément de boîtier (14) ne possédant aucune deuxième ouverture supplémentaire ou une pluralité de deuxièmes ouvertures (14a) pénétrant au niveau du plan (14b) et ayant des largeurs d'ouverture (14c) associées, les largeurs d'ouverture (14c) de toutes les deuxièmes ouvertures (14a) étant inférieures ou égales à 5 mm,
- un deuxième élément de boîtier (11) de forme cylindrique creuse fixe qui entoure l'unité rotative (4, 41, 42) étant présent, lequel n'accompagne pas la rotation de l'unité de convoyage linéaire (3, 31) lors de sa rotation (D),
- le plan (14b) du premier élément de boîtier (14) qui accompagne la rotation de l'unité de convoyage linéaire (3, 31) lors de sa rotation (D) se trouvant à l'intérieur du deuxième élément de boîtier (11) fixe et étant de forme complémentaire au deuxième élément de boîtier (11) fixe,
- l'unité rotative (4, 41, 42) et tous les composants entraînés du dispositif de convoyage (1) étant disposés entièrement à l'intérieur du deuxième élément de boîtier (11) de forme cylindrique creuse et
- le deuxième élément de boîtier (11) de forme cylindrique creuse étant réalisé sous la forme d'une enveloppe fermée en elle-même, qui ne possède aucune ou une pluralité d'ouvertures rondes ou rectangulaires dont les diamètres on dont la largeur libre ou la longueur libre sont inférieurs ou égaux à 5 mm.

3. Dispositif de convoyage (1) pour un récipient de transport (91, 92, 93, 94) pour des verres de lunette, comprenant :
- une unité de convoyage linéaire (3, 31) destinée à convoyer le récipient de transport (91, 92) dans une direction rectiligne (L)
- une unité rotative (4, 41, 42) destinée à effectuer une rotation (D) de l'unité de convoyage linéaire (3, 31)
- un premier élément de boîtier (14) pour l'unité rotative (4, 41, 42), possédant un plan (14b) et accompagnant la rotation de l'unité de convoyage linéaire (3, 31) lors de sa rotation (D), le premier élément de boîtier (14) qui accompagne la rotation de l'unité de convoyage linéaire (3, 31) lors de sa rotation (D) possédant une ou plusieurs premières ouvertures (17a, 17b) à travers lesquelles l'unité de convoyage linéaire (3, 31) entrecoupe le plan (14b), l'unité de convoyage linéaire (3, 31) étant espacée du plan (14b) par un ou plusieurs interstices (18) ayant des cotes d'interstice (18a) associées,
- les cotes d'interstice (18a) de tous les interstices (18) étant égales ou inférieures à 5 mm et le premier élément de boîtier (14) ne possédant aucune deuxième ouverture supplémentaire ou une pluralité de deuxièmes ouvertures (14a) pénétrant au niveau du plan (14b) et ayant des largeurs d'ouverture (14c) associées, les largeurs d'ouverture (14c) de toutes les deuxièmes ouvertures (14a) étant inférieures ou égales à 5 mm,
- un deuxième élément de boîtier (11) de forme cylindrique creuse fixe qui entoure l'unité rotative (4, 41, 42) étant présent, lequel n'accompagne pas la rotation de l'unité de convoyage linéaire (3, 31) lors de sa rotation (D),
- le plan (14b) du premier élément de boîtier (14) qui accompagne la rotation de l'unité de convoyage linéaire (3, 31) lors de sa rotation (D) se trouvant à l'intérieur du deuxième élément de boîtier (11) fixe et étant de forme complémentaire au deuxième élément de boîtier (11) fixe,
- l'unité rotative (4, 41, 42) et tous les composants entraînés du dispositif de convoyage (1) étant disposés entièrement à l'intérieur du deuxième élément de boîtier (11) de forme cylindrique creuse et
- le deuxième élément de boîtier (11) de forme cylindrique creuse étant réalisé sous la forme d'une enveloppe fermée en elle-même, qui ne possède aucune ou une pluralité d'ouvertures rondes ou rectangulaires dont les diamètres on dont la largeur libre ou la longueur libre sont inférieurs ou égaux à 5 mm,
un dispositif de maintien (25) étant présent pour maintenir les récipients de transport (91, 92, 93, 94) à une distance donnée au-dessus du plan (14b),
- un dispositif de levage (23) étant présent pour lever les récipients de transport (91, 92) du plan (14b) dans la direction verticale et/ou les abaisser sur du plan (14b) et
- le dispositif de levage (23) est conçu pour lever les récipients de transport (91, 92) à une distance au-dessus du plan (14b) de sorte que le dispositif de maintien (25) étant présent peut maintenir les récipients de transport (91, 92, 93, 94), le dispositif de levage (23) possédant un ou plusieurs vérins de levage (24) pour lever ou abaisser les récipients de transport (91, 92, 93, 94) dans la direction verticale, le premier élément de boîtier (14) qui accompagne la rotation de l'unité de convoyage linéaire (3, 31) lors de sa rotation (D) possédant une ou plusieurs quatrièmes ouvertures (24a) à travers lesquelles l'un ou les plusieurs vérins de levage (24) entrecoupe ou entrecoupent le plan.

4. Dispositif de convoyage (1) selon la revendication 3, caractérisé en ce l'un ou les plusieurs vérins de levage (24) et ou sont espacé(s) du plan (14b) par un ou plusieurs interstices (24b) ayant des cotes d'interstice (24c) associées et en ce que les cotes d'interstice (24c) de tous les interstices (24b) sont inférieures ou égales à 5 mm.
